# EUROPEAN PATENT APPLICATION

(11) **EP 4 412 270 A1**
(43) Date of publication of application: **07.08.2024**
(21) Application number: 22875072.5
(22) Date of filing: 29.09.2022
(51) Int. Cl.: H04W 8/24, H04W 74/08

(54) **ACCESS METHOD AND APPARATUS, TERMINAL DEVICE, AND NETWORK DEVICE**

(30) Priority: 30.09.2021 CN 202111162480
(71) Applicant: Datang Mobile Communications Equipment Co., Ltd., Beijing 100085 (CN)
(72) Inventor: FEI, Yongqiang, Beijing 100085 (CN); ZENG, Erlin, Beijing 100085 (CN)
(74) Representative: Maiwald GmbH
(86) International application number: PCT/CN2022/122587
(87) International publication number: WO 2023/051690

(57) **Abstract**

The present disclosure provides an access method, an access device, a UE and a network device. The access method includes transmitting a first pilot and a first message in a random access procedure. A UE type of the UE is indicated in the first pilot and/or the first message in accordance with a predefined mode and/or indication information.

## Description

### CROSS-REFERENCE TO RELATED APPLICATION

This application claims a priority of the Chinese patent application No. 202111162480.8 filed on September 30, 2021, which is incorporated herein by reference in its entirety.

### TECHNICAL FIELD

The present disclosure relates to the field of wireless communication technology, in particular to an access method, an access device, a User Equipment (UE) and a network device.

### BACKGROUND

In a 5^{th}-Gneration Mobile Communication Technology New Radio (5G NR) system, along with the evolution of the technology, a Reduced Capability (RedCap) User Equipment (UE) needs to be supported. As compared with a common UE (i.e., a non-RedCap UE), the RedCap UE intends to reduce the implementation complexity and cost of the UE, so a maximum bandwidth supported by the RedCap UE is smaller than that supported by the common UE. For example, in the case of a carrier frequency of 6GHz or below, the maximum bandwidth of the common UE is 100MHz, while the maximum bandwidth of the RedCap UE is merely 20MHz. In addition, the minimum quantity of reception antennae for the common UE is 4 or 2, while the minimum quantity of reception antennae for the RedCap UE is 2 or 1.

Due to different reception capabilities of the common UE and the RedCap UE, the earlier a base station (e.g., gNB in the 5G NR system) knows whether a UE initiating an random access is a common UE or an RedCap UE, the earlier the base station performs corresponding scheduling, so it is able to improve a resource utilization rate of a network. In the NR, there are two kinds of random access procedures: a four-step random access, i.e., a four-step Random Access Channel (RACH), which is also called as Type-1 random access in the NR standard; and a two-step random access, i.e., a two-step RACH, which is also called as Type-2 random access in the NR standard.

The RedCap UE initiates either the four-step RAHC or the two-step RACH. In the random access procedure, the RedCap UE reports its own UE type at different stages, and correspondingly, the base station identifies the UE type at different stages too. However, there is currently no definite scheme about the stages at which the RedCap UE reports its own UE type (and the stages at which the base station identifies the type of the UE initiating the random access).

### SUMMARY

An object of the present disclosure is to provide an access method, an access device, a UE and a network device, so as to report the UE type of the RedCap UE.

In one aspect, the present disclosure provides in some embodiments an access method performed by a UE, including: transmitting a first pilot and a first message in a random access procedure. A UE type of the UE is indicated in the first pilot and/or the first message in accordance with a predefined mode and/or indication information.

In a possible embodiment of the present disclosure, the UE type of the UE is indicated in the first pilot and/or the first message in accordance with the predefined mode and/or indication information through at least one of indicating the UE type of the UE in the first pilot in accordance with a first predefined mode; indicating the UE type of the UE in the first message in accordance with a second predefined mode; indicating the UE type of the UE in the first pilot and the first message in a third predefined mode; indicating the UE type of the UE in the first pilot in accordance with a fourth predefined mode, and indicating the UE type of the UE in the first message in accordance with first indication information; indicating the UE type of the UE in the first pilot in accordance with second indication information, and indicating the UE type of the UE in the first message in accordance with a fifth predefined mode; indicating the UE type of the UE in the first pilot and/or the first message in accordance with third indication information; or indicating the UE type of the UE in the random access procedure in accordance with fourth indication information, and indicating the UE type of the UE in the first pilot or the first message in accordance with a sixth predefined mode.

In a possible embodiment of the present disclosure, the indicating the UE type of the UE in the first pilot in accordance with the first predefined mode includes, in the case that a network device has configured a specific Physical Random Access Channel (PRACH) preamble sequence and/or a specific random access occasion for the UE, indicating the UE type of the UE in the first pilot.

In a possible embodiment of the present disclosure, the indicating the UE type of the UE in the first message in accordance with the second predefined mode includes at least one of: in the case that the UE type of the UE fails to be indicated in the first pilot, indicating the UE type of the UE in the first message; in the case that a network device fails to configure a specific PRACH preamble sequence and a specific random access occasion for the UE, indicating the UE type of the UE in the first message; in the case that the network device has configured a specific initial uplink Bandwidth Part (BWP) for the UE, indicating the UE type of the UE in the first message; in the case that the network device fails to configure the specific PRACH preamble sequence and the specific random access occasion for the UE but has configured the specific initial uplink BWP for the UE, indicating the UE type of the UE in the first message; or in the case that there is no limiting condition, indicating the UE type of the UE in the first message.

In a possible embodiment of the present disclosure, the indicating the UE type of the UE in the first pilot and the first message in accordance with the third predefined mode includes: in the case that a network device has configured a specific PRACH preamble sequence and/or a specific random access occasion for the UE, indicating the UE type of the UE in the first pilot, and in the case that the network device has configured a specific initial uplink BWP for the UE, indicating the UE type of the UE in the first message; or in the case that the network device has configured the specific PRACH preamble sequence and/or the specific random access occasion for the UE, indicating the UE type of the UE in the first pilot, and in the case that there is no limiting condition, indicating the UE type of the UE in the first message.

In a possible embodiment of the present disclosure, the indicating the UE type of the UE in the first pilot in accordance with the fourth predefined mode includes, in the case that a network device has configured a specific PRACH preamble sequence and/or a specific random access occasion for the UE, indicating the UE type of the UE in the first pilot, and the indicating the UE type of the UE in the first message in accordance with the first indication information includes, in the case that the first indication information indicates that a UE type is to be indicated in the first message, indicating the UE type of the UE in the first message.

In a possible embodiment of the present disclosure, the indicating the UE type of the UE in the first pilot in accordance with the second indication information includes, in the case that the second indication information indicates that a UE type is to be indicated in the first pilot, indicating the UE type of the UE in the first pilot. The indicating the UE type of the UE in the first message in accordance with the fifth predefined mode includes at least one of: in the case that the UE type of the UE fails to be indicated in the first pilot, indicating the UE type of the UE in the first message; in the case that a network device has configured a specific initial uplink BWP for the UE, indicating the UE type of the UE in the first message; in the case that the UE type of the UE fails to be indicated in the first pilot and the network device has configured the specific initial uplink BWP for the UE, indicating the UE type of the UE in the first message; or in the case that there is no limiting condition, indicating the UE type of the UE in the first message.

In a possible embodiment of the present disclosure, the indicating the UE type of the UE in the first pilot and/or the first message in accordance with the third indication information includes at least one of: in the case that the third indication information indicates that a UE type is to be indicated merely in the first pilot, indicating the UE type of the UE in the first pilot; in the case that the third indication information indicates that a UE type is to be indicated merely in the first message, indicating the UE type of the UE in the first message; in the case that the third indication information indicates that a UE type is to be indicated in the first pilot and the first message, indicating the UE type of the UE in the first pilot and the first message; or in the case that the third indication information indicates that no UE type is to be indicated in the first pilot and the first message, not indicating the UE type of the UE in the first pilot and the first message.

In a possible embodiment of the present disclosure, the indicating the UE type of the UE in the random access procedure in accordance with the fourth indication information includes, in the case that the fourth indication information indicates that the UE type of the UE is to be indicated in the random access procedure, indicating the UE type of the UE in the random access procedure in accordance with the fourth indication information. The indicating the UE type of the UE in the first pilot or the first message in accordance with the sixth predefined mode includes: in the case that a network device has configured a specific PRACH preamble sequence and/or a specific random access occasion for the UE, indicating the UE type of the UE in the first pilot; or in the case that the network device fails to configure the specific PRACH preamble sequence and the specific random access occasion for the UE, indicating the UE type of the UE in the first message; or in the case that the UE type of the UE fails to be indicated in the first pilot, indicating the UE type of the UE in the first message.

In a possible embodiment of the present disclosure, the UE type of the UE is indicated in the first pilot through using, by the first pilot, a PRACH preamble sequence specific for the UE, and/or transmitting the first pilot in a random access occasion specific for the UE, wherein the UE type of the UE is indicated in the first message through carrying a logical channel identity specific for the UE in the first message.

In a possible embodiment of the present disclosure, the UE type is an RedCap UE type.

In a possible embodiment of the present disclosure, the random access procedure is a four-step random access procedure, the first pilot is a PRACH pilot in the random access procedure, and the first message is a message3 (Msg3) in the random access procedure; or the random access procedure is a two-step random access procedure, the first pilot is a PRACH pilot in a message A (MsgA) in the random access procedure, and the first message is a Physical Uplink Shared Channel (PUSCH) in the MsgA in the random access procedure.

In another aspect, the present disclosure provides in some embodiments an access method performed by a network device, including: receiving a first pilot and a first message from a UE in a random access procedure; and determining a UE type of the UE through the first pilot and/or the first message in accordance with a predefined mode and/or indication information.

In a possible embodiment of the present disclosure, the determining the UE type of the UE through the first pilot and/or the first message in accordance with the predefined mode and/or indication information includes at least one of determining the UE type of the UE through the first pilot in accordance with a first predefined mode; determining the UE type of the UE through the first message in accordance with a second predefined mode; determining the UE type of the UE through the first pilot and/or the first message in accordance with a third predefined mode; determining the UE type of the UE through the first pilot in accordance with a fourth predefined mode, and determining the UE type of the UE through the first message in accordance with first indication information; determining the UE type of the UE through the first pilot in accordance with second indication information, and determining the UE type of the UE through the first message in accordance with a fifth predefined mode; determining the UE type of the UE through the first pilot and/or the first message in accordance with third indication information; or determining the UE type of the UE in the random access procedure in accordance with fourth indication information, and determining the UE type of the UE through the first pilot or the first message in accordance with a sixth predefined mode.

In a possible embodiment of the present disclosure, the determining the UE type of the UE through the first pilot in accordance with the first predefined mode includes, in the case that the network device has configured a specific PRACH preamble sequence and/or a specific random access occasion for the UE, determining the UE type of the UE through the first pilot.

In a possible embodiment of the present disclosure, the determining the UE type of the UE through the first message in accordance with the second predefined mode includes at least one of: in the case that the UE type of the UE fails to be indicated in the first pilot, determining the UE type of the UE through the first message; in the case that the network device fails to configure a specific PRACH preamble sequence and a specific random access occasion for the UE, determining the UE type of the UE through the first message; in the case that the network device has configured a specific initial uplink Bandwidth Part (BWP) for the UE, determining the UE type of the UE through the first message; in the case that the network device fails to configure the specific PRACH preamble sequence and the specific random access occasion for the UE but has configured the specific initial uplink BWP for the UE, determining the UE type of the UE through the first message; or in the case that there is no limiting condition, determining the UE type of the UE through the first message.

In a possible embodiment of the present disclosure, the determining the UE type of the UE through the first pilot and/or the first message in accordance with the third predefined mode includes: in the case that the network device has configured a specific PRACH preamble sequence and/or a specific random access occasion for the UE, determining the UE type of the UE through the first pilot, and in the case that the network device has configured a specific initial uplink BWP for the UE, determining the UE type of the UE through the first message; or in the case that the network device has configured the specific PRACH preamble sequence and/or the specific random access occasion for the UE, determining the UE type of the UE through the first pilot, and in the case that there is no limiting condition, determining the UE type of the UE through the first message.

In a possible embodiment of the present disclosure, the determining the UE type of the UE through the first pilot in accordance with the fourth predefined mode includes, in the case that the network device has configured a specific PRACH preamble sequence and/or a specific random access occasion for the UE, determining the UE type of the UE through the first pilot, and the determining the UE type of the UE through the first message in accordance with the first indication information includes, in the case that the first indication information indicates that a UE type is to be indicated in the first message, determining the UE type of the UE through the first message.

In a possible embodiment of the present disclosure, the determining the UE type of the UE through the first pilot in accordance with the second indication information includes, in the case that the second indication information indicates that a UE type is to be indicated in the first pilot, determining the UE type of the UE through the first pilot. The determining the UE type of the UE through the first message in accordance with the fifth predefined mode includes at least one of: in the case that the UE type of the UE fails to be indicated in the first pilot, determining the UE type of the UE through the first message; in the case that the network device has configured a specific initial uplink BWP for the UE, determining the UE type of the UE through the first message; in the case that the UE type of the UE fails to be indicated in the first pilot and the network device has configured the specific initial uplink BWP for the UE, determining the UE type of the UE through the first message; or in the case that there is no limiting condition, determining the UE type of the UE through the first message.

In a possible embodiment of the present disclosure, the determining the UE type of the UE through the first pilot and/or the first message in accordance with the third indication information includes at least one of: in the case that the third indication information indicates that a UE type is to be indicated merely in the first pilot, determining the UE type of the UE through the first pilot; in the case that the third indication information indicates that a UE type is to be indicated merely in the first message, determining the UE type of the UE through the first message; in the case that the third indication information indicates that a UE type is to be indicated in the first pilot and the first message, determining the UE type of the UE through the first pilot and the first message; or in the case that the third indication information indicates that no UE type is to be indicated in the first pilot and the first message, not determining the UE type of the UE through the first pilot and the first message.

In a possible embodiment of the present disclosure, the determining the UE type of the UE in the random access procedure in accordance with the fourth indication information includes, in the case that the fourth indication information indicates that the UE type of the UE is to be indicated in the random access procedure, determining the UE type of the UE in the random access procedure in accordance with the fourth indication information. The determining the UE type of the UE through the first pilot or the first message in accordance with the sixth predefined mode includes: in the case that the network device has configured a specific PRACH preamble sequence and/or a specific random access occasion for the UE, determining the UE type of the UE through the first pilot; or in the case that the network device fails to configure the specific PRACH preamble sequence and the specific random access occasion for the UE, determining the UE type of the UE through the first message; or in the case that the UE type of the UE fails to be indicated in the first pilot, determining the UE type of the UE through the first message.

In a possible embodiment of the present disclosure, the determining the UE type of the UE through the first pilot includes determining the UE type of the UE through receiving the first pilot using a PRACH preamble sequence specific for the UE, and/or determining the UE type of the UE through the first pilot received in a random access occasion specific for the UE. The determining the UE type of the UE through the first message includes determining the UE type of the UE through a logical channel identity specific for the UE carried in the first message.

In a possible embodiment of the present disclosure, the UE type is an RedCap UE type.

In a possible embodiment of the present disclosure, the random access procedure is a four-step random access procedure, the first pilot is a PRACH pilot in the random access procedure, and the first message is an Msg3 in the random access procedure; or the random access procedure is a two-step random access procedure, the first pilot is a PRACH pilot in an MsgA in the random access procedure, and the first message is a PUSCH in the MsgA in the random access procedure.

In yet another aspect, the present disclosure provides in some embodiments a UE, including a memory, a transceiver and a processor. The memory is configured to store therein a computer program, the transceiver is configured to receive and transmit data under the control of the processor, and the processor is configured to read the computer program in the memory so as to transmit a first pilot and a first message in a random access procedure. A UE type of the UE is indicated in the first pilot and/or the first message in accordance with a predefined mode and/or indication information.

In a possible embodiment of the present disclosure, when indicating the UE type of the UE in the first pilot and/or the first message in accordance with the predefined mode and/or indication information, the processor is configured to perform at least one of indicating the UE type of the UE in the first pilot in accordance with a first predefined mode; indicating the UE type of the UE in the first message in accordance with a second predefined mode; indicating the UE type of the UE in the first pilot and the first message in a third predefined mode; indicating the UE type of the UE in the first pilot in accordance with a fourth predefined mode, and indicating the UE type of the UE in the first message in accordance with first indication information; indicating the UE type of the UE in the first pilot in accordance with second indication information, and indicating the UE type of the UE in the first message in accordance with a fifth predefined mode; indicating the UE type of the UE in the first pilot and/or the first message in accordance with third indication information; or indicating the UE type of the UE in the random access procedure in accordance with fourth indication information, and indicating the UE type of the UE in the first pilot or the first message in accordance with a sixth predefined mode.

In a possible embodiment of the present disclosure, when indicating the UE type of the UE in the first pilot in accordance with the first predefined mode, the processor is configured to, in the case that a network device has configured a specific PRACH preamble sequence and/or a specific random access occasion for the UE, indicate the UE type of the UE in the first pilot.

In a possible embodiment of the present disclosure, when indicating the UE type of the UE in the first message in accordance with the second predefined mode, the processor is configured to perform at least one of: in the case that the UE type of the UE fails to be indicated in the first pilot, indicating the UE type of the UE in the first message; in the case that a network device fails to configure a specific PRACH preamble sequence and a specific random access occasion for the UE, indicating the UE type of the UE in the first message; in the case that the network device has configured a specific initial uplink BWP for the UE, indicating the UE type of the UE in the first message; in the case that the network device fails to configure the specific PRACH preamble sequence and the specific random access occasion for the UE but has configured the specific initial uplink BWP for the UE, indicating the UE type of the UE in the first message; or in the case that there is no limiting condition, indicating the UE type of the UE in the first message.

In a possible embodiment of the present disclosure, when indicating the UE type of the UE in the first pilot and the first message in accordance with the third predefined mode, the processor is configured to: in the case that a network device has configured a specific PRACH preamble sequence and/or a specific random access occasion for the UE, indicate the UE type of the UE in the first pilot, and in the case that the network device has configured a specific initial uplink BWP for the UE, indicate the UE type of the UE in the first message; or in the case that the network device has configured the specific PRACH preamble sequence and/or the specific random access occasion for the UE, indicate the UE type of the UE in the first pilot, and in the case that there is no limiting condition, indicate the UE type of the UE in the first message.

In a possible embodiment of the present disclosure, when indicating the UE type of the UE in the first pilot in accordance with the fourth predefined mode, the processor is configured to, in the case that a network device has configured a specific PRACH preamble sequence and/or a specific random access occasion for the UE, indicate the UE type of the UE in the first pilot, and when indicating the UE type of the UE in the first message in accordance with the first indication information, the processor is configured to, in the case that the first indication information indicates that a UE type is to be indicated in the first message, indicate the UE type of the UE in the first message.

In a possible embodiment of the present disclosure, when indicating the UE type of the UE in the first pilot in accordance with the second indication information, the processor is configured to, in the case that the second indication information indicates that a UE type is to be indicated in the first pilot, indicate the UE type of the UE in the first pilot. When indicating the UE type of the UE in the first message in accordance with the fifth predefined mode, the processor is configured to perform at least one of: in the case that the UE type of the UE fails to be indicated in the first pilot, indicating the UE type of the UE in the first message; in the case that a network device has configured a specific initial uplink BWP for the UE, indicating the UE type of the UE in the first message; in the case that the UE type of the UE fails to be indicated in the first pilot and the network device has configured the specific initial uplink BWP for the UE, indicating the UE type of the UE in the first message; or in the case that there is no limiting condition, indicating the UE type of the UE in the first message.

In a possible embodiment of the present disclosure, when indicating the UE type of the UE in the first pilot and/or the first message in accordance with the third indication information, the processor is configured to perform at least one of: in the case that the third indication information indicates that a UE type is to be indicated merely in the first pilot, indicating the UE type of the UE in the first pilot; in the case that the third indication information indicates that a UE type is to be indicated merely in the first message, indicating the UE type of the UE in the first message; in the case that the third indication information indicates that a UE type is to be indicated in the first pilot and the first message, indicating the UE type of the UE in the first pilot and the first message; or in the case that the third indication information indicates that no UE type is to be indicated in the first pilot and the first message, not indicating the UE type of the UE in the first pilot and the first message.

In a possible embodiment of the present disclosure, when indicating the UE type of the UE in the random access procedure in accordance with the fourth indication information, the processor is configured to, in the case that the fourth indication information indicates that the UE type of the UE is to be indicated in the random access procedure, indicate the UE type of the UE in the random access procedure in accordance with the fourth indication information. When indicating the UE type of the UE in the first pilot or the first message in accordance with the sixth predefined mode, the processor is configured to: in the case that a network device has configured a specific PRACH preamble sequence and/or a specific random access occasion for the UE, indicate the UE type of the UE in the first pilot; or in the case that the network device fails to configure the specific PRACH preamble sequence and the specific random access occasion for the UE, indicate the UE type of the UE in the first message; or in the case that the UE type of the UE fails to be indicated in the first pilot, indicate the UE type of the UE in the first message.

In a possible embodiment of the present disclosure, the UE type of the UE is indicated in the first pilot through using, by the first pilot, a PRACH preamble sequence specific for the UE, and/or transmitting the first pilot in a random access occasion specific for the UE, wherein the UE type of the UE is indicated in the first message through carrying a logical channel identity specific for the UE in the first message.

In still yet another aspect, the present disclosure provides in some embodiments a network device, including a memory, a transceiver and a processor. The memory is configured to store therein a computer program, and the transceiver is configured to receive and transmit data under the control of the processor. The processor is configured to read the computer program in the memory so as to: receive a first pilot and a first message from a UE in a random access procedure; and determine a UE type of the UE through the first pilot and/or the first message in accordance with a predefined mode and/or indication information.

In a possible embodiment of the present disclosure, when determining the UE type of the UE through the first pilot and/or the first message in accordance with the predefined mode and/or indication information, the processor is configured to perform at least one of determining the UE type of the UE through the first pilot in accordance with a first predefined mode; determining the UE type of the UE through the first message in accordance with a second predefined mode; determining the UE type of the UE through the first pilot and/or the first message in accordance with a third predefined mode; determining the UE type of the UE through the first pilot in accordance with a fourth predefined mode, and determining the UE type of the UE through the first message in accordance with first indication information; determining the UE type of the UE through the first pilot in accordance with second indication information, and determining the UE type of the UE through the first message in accordance with a fifth predefined mode; determining the UE type of the UE through the first pilot and/or the first message in accordance with third indication information; or determining the UE type of the UE in the random access procedure in accordance with fourth indication information, and determining the UE type of the UE through the first pilot or the first message in accordance with a sixth predefined mode.

In a possible embodiment of the present disclosure, when determining the UE type of the UE through the first pilot in accordance with the first predefined mode, the processor is configured to, in the case that the network device has configured a specific PRACH preamble sequence and/or a specific random access occasion for the UE, determine the UE type of the UE through the first pilot.

In a possible embodiment of the present disclosure, when determining the UE type of the UE through the first message in accordance with the second predefined mode, the processor is configured to perform at least one of: in the case that the UE type of the UE fails to be indicated in the first pilot, determining the UE type of the UE through the first message; in the case that the network device fails to configure a specific PRACH preamble sequence and a specific random access occasion for the UE, determining the UE type of the UE through the first message; in the case that the network device has configured a specific initial uplink BWP for the UE, determining the UE type of the UE through the first message; in the case that the network device fails to configure the specific PRACH preamble sequence and the specific random access occasion for the UE but has configured the specific initial uplink BWP for the UE, determining the UE type of the UE through the first message; or in the case that there is no limiting condition, determining the UE type of the UE through the first message.

In a possible embodiment of the present disclosure, when determining the UE type of the UE through the first pilot and/or the first message in accordance with the third predefined mode, the processor is configured to: in the case that the network device has configured a specific PRACH preamble sequence and/or a specific random access occasion for the UE, determine the UE type of the UE through the first pilot, and in the case that the network device has configured a specific initial uplink BWP for the UE, determine the UE type of the UE through the first message; or in the case that the network device has configured the specific PRACH preamble sequence and/or the specific random access occasion for the UE, determine the UE type of the UE through the first pilot, and in the case that there is no limiting condition, determine the UE type of the UE through the first message.

In a possible embodiment of the present disclosure, when determining the UE type of the UE through the first pilot in accordance with the fourth predefined mode, the processor is configured to, in the case that the network device has configured a specific PRACH preamble sequence and/or a specific random access occasion for the UE, determine the UE type of the UE through the first pilot, and when determining the UE type of the UE through the first message in accordance with the first indication information, the processor is configured to, in the case that the first indication information indicates that a UE type is to be indicated in the first message, determine the UE type of the UE through the first message.

In a possible embodiment of the present disclosure, when determining the UE type of the UE through the first pilot in accordance with the second indication information, the processor is configured to, in the case that the second indication information indicates that a UE type is to be indicated in the first pilot, determine the UE type of the UE through the first pilot. When determining the UE type of the UE through the first message in accordance with the fifth predefined mode, the processor is configured to perform at least one of: in the case that the UE type of the UE fails to be indicated in the first pilot, determining the UE type of the UE through the first message; in the case that the network device has configured a specific initial uplink BWP for the UE, determining the UE type of the UE through the first message; in the case that the UE type of the UE fails to be indicated in the first pilot and the network device has configured the specific initial uplink BWP for the UE, determining the UE type of the UE through the first message; or in the case that there is no limiting condition, determining the UE type of the UE through the first message.

In a possible embodiment of the present disclosure, when determining the UE type of the UE through the first pilot and/or the first message in accordance with the third indication information, the processor is configured to perform at least one of: in the case that the third indication information indicates that a UE type is to be indicated merely in the first pilot, determining the UE type of the UE through the first pilot; in the case that the third indication information indicates that a UE type is to be indicated merely in the first message, determining the UE type of the UE through the first message; in the case that the third indication information indicates that a UE type is to be indicated in the first pilot and the first message, determining the UE type of the UE through the first pilot and the first message; or in the case that the third indication information indicates that no UE type is to be indicated in the first pilot and the first message, not determining the UE type of the UE through the first pilot and the first message.

In a possible embodiment of the present disclosure, when determining the UE type of the UE in the random access procedure in accordance with the fourth indication information, the processor is configured to, in the case that the fourth indication information indicates that the UE type of the UE is to be indicated in the random access procedure, determine the UE type of the UE in the random access procedure in accordance with the fourth indication information. When determining the UE type of the UE through the first pilot or the first message in accordance with the sixth predefined mode, the processor is configured to: in the case that the network device has configured a specific PRACH preamble sequence and/or a specific random access occasion for the UE, determine the UE type of the UE through the first pilot; or in the case that the network device fails to configure the specific PRACH preamble sequence and the specific random access occasion for the UE, determine the UE type of the UE through the first message; or in the case that the UE type of the UE fails to be indicated in the first pilot, determine the UE type of the UE through the first message.

In a possible embodiment of the present disclosure, when determining the UE type of the UE through the first pilot, the processor is configured to determine the UE type of the UE through receiving the first pilot using a PRACH preamble sequence specific for the UE, and/or determining the UE type of the UE through the first pilot received in a random access occasion specific for the UE. When determining the UE type of the UE through the first message, the processor is configured to determine the UE type of the UE through a logical channel identity specific for the UE carried in the first message.

In still yet another aspect, the present disclosure provides in some embodiments an access device applied to a UE, including a transmission unit configured to transmit a first pilot and a first message in a random access procedure. A UE type of the UE is indicated in the first pilot and/or the first message in accordance with a predefined mode and/or indication information.

In still yet another aspect, the present disclosure provides in some embodiments an access device applied to a network device, including: a reception unit configured to receive a first pilot and a first message from a UE in a random access procedure; and a processing unit configured to determine a UE type of the UE through the first pilot and/or the first message in accordance with a predefined mode and/or indication information.

In still yet another aspect, the present disclosure provides in some embodiments a processor-readable storage medium storing therein a computer program. The computer program is executed by a processor so as to implement the steps of the above-mentioned access method.

The present disclosure has the following beneficial effects.

According to the access method in the embodiments of the present disclosure, an occasion for indicating, by the UE, the UE type to the network device is determined in accordance with the predefined mode and/or indication information. As a result, it is able to determine a report occasion for reporting, by the RedCap UE, the UE type, thereby to report the UE type of the RedCap UE.

### BRIEF DESCRIPTION OF THE DRAWINGS

FIG. 1 is a schematic view showing a system to which an access method is applied according to one embodiment of the present disclosure;
FIG. 2 is a flow chart of the access method according to one embodiment of the present disclosure;
FIG. 3 is a flow chart of the access method for a four-step RACH according to one embodiment of the present disclosure;
FIG. 4 is a flow chart of the access method for a two-step RACH according to one embodiment of the present disclosure;
FIGS. 5-10 are flow charts of the access method according to specific embodiments of the present disclosure;
FIG. 11 is a flow chart of an access method according to one embodiment of the present disclosure;
FIG. 12 is a schematic view showing a UE according to one embodiment of the present disclosure;
FIG. 13 is a schematic view showing a network device according to one embodiment of the present disclosure;
FIG. 14 is a schematic view showing an access device according to one embodiment of the present disclosure; and
FIG. 15 is a schematic view showing an access device according to one embodiment of the present disclosure.

### DETAILED DESCRIPTION

The expression "and/or" in the embodiments of the present disclosure is used to describe a relationship between objects, and it may include three relationships. For example, "A and/or B" represents that, there is only A, there are both A and B, and there is only B. Further, the symbol "/" usually refers to "or".

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

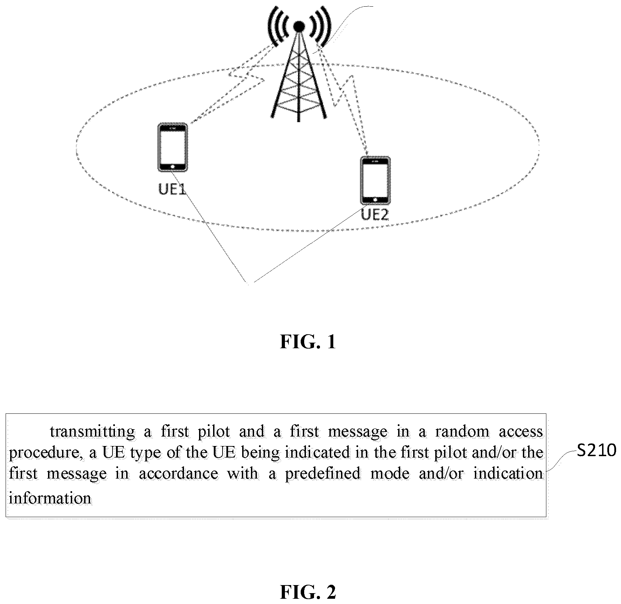

FIG. 1 shows a system to which an access method in the embodiments of the present disclosure is applied, and the system includes a UE 10 and a network device 20.

The access method in the embodiments of the present disclosure is applied to various systems, especially a 5G system, more particularly a system where two different types of UEs need to be identified at an initial access stage. Taking an application scenario in FIG. 1 as an example, in the system, a plurality of UEs, including UE1 and UE2, initiates a random access to the network device 20, so as to apply for a wireless network connection service. The network device receives a random access request from at least one UE, and provides a wireless service for the UE. The network device 20 performs data interaction and transmission with UE1 and UE2 through wireless communication.

For example, the system to which the access method in the embodiments of the present disclosure is applied include a Global System of Mobile communication (GSM), a Code Division Multiple Access (CDMA) system, a Wideband Code Division Multiple Access (WCDMA) General Packet Radio Service (GPRS) system, a Long Term Evolution (LTE) system, an LTE Frequency Division Duplexing (FDD) system, an LTE Time Division Duplexing (TDD) system, a Long Term Evolution Advanced (LTE-A) system, a Universal Mobile Telecommunication System (UMTS), a Worldwide Interoperability for Microwave Access (WiMAX) system, or a 5G NR system. Each of these systems includes a terminal device and a network device. Each system further includes a core network part, e.g., an Evolved Packet System (EPS) or 5G system (5GS).

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be particularly defined herein.

The network device involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

In order to solve the problem in the related art where there is no definite report occasion for reporting a UE type of an RedCap UE, the present disclosure provides in some embodiments an access method, so as to determine an occasion for indicating, by a UE, a UE type to a network device through a predefined mode and/or indication information, thereby to determine a report occasion for reporting, by the RedCap UE, the UE type.

As shown in FIG. 2, the present disclosure provides in some embodiments an access method performed by a UE, which includes S210 of transmitting a first pilot and a first message in a random access procedure. A UE type of the UE is indicated in the first pilot and/or the first message in accordance with a predefined mode and/or indication information.

In a possible embodiment of the present disclosure, when the UE type is an RedCap UE type, i.e., when the UE is an RedCap UE, S210 is adopted so as to indicate the UE type of the UE in the first pilot and/or the first message in the random access procedure in accordance with the predefined mode and/or indication information.

In a possible embodiment of the present disclosure, the access method is applied to a four-step random access procedure or a two-step random access procedure.

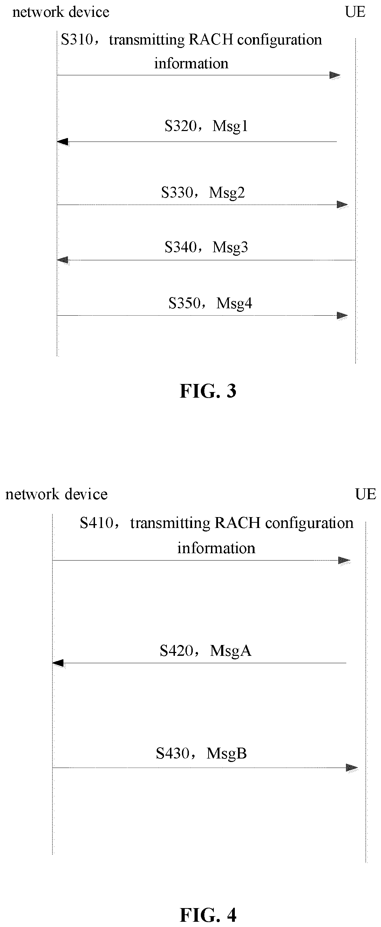

FIG. 3 shows steps of the four-step random access (also called as four-step RACH) procedure where the access method is adopted.

S310: a network device transmits RACH configuration information to the UE. In a possible embodiment of the present disclosure, the network device broadcasts RACH configuration information in a broadcast System Information Block1 (SIB 1). In a possible embodiment of the present disclosure, four-step RACH configuration information indicates a set of RACH occasion (RO) resources and a mapping relationship between a Synchronization Signal Block (SSB) and an RO.

S320: the UE transmits a message1 (also expressed as Msg1) to the network device, and the Msg1 includes a PRACH pilot which includes a preamble.

S330: the network device transmits a Random Access Response (RAR), which is also called as a message2 (also expressed as Msg2), to the UE.

S340: the UE transmits a Radio Resource Control (RRC) connection setup request, which is also called as a message3 (also expressed as Msg3), to the network device.

S350: the network device transmits an RRC connection response message, which is also called as a conflict resolution message or a message4 (also expressed as Msg4), to the UE.

FIG. 4 shows steps of the two-step random access (also called as two-step RACH) procedure where the access method is adopted.

S410: the network device transmits RACH configuration information to the UE. In a possible embodiment of the present disclosure, the network device broadcasts the RACH configuration information in a broadcast SIB 1. In a possible embodiment of the present disclosure, the two-step RACH configuration information indicates a set of RO resources, a set of Physical Uplink Shared Channel (PUSCH) Occasion (PO) resources, a mapping relationship between an SSB and an RO, and a mapping relationship between the RO and a PO.

S420: the UE transmits a message A (also expressed as MsgA) to the network device, and the MsgA includes a PRACH pilot and a PUSCH.

S430: the network device transmits a message B (also expressed as MsgB), which is also called as conflict resolution message, to the UE.

In the embodiments of the present disclosure, in S210, the random access procedure is a four-step random access procedure, the first pilot is a PRACH pilot in the random access procedure, and the first message is an Msg3 in the random access procedure; or the random access procedure is a two-step random access procedure, the first pilot is a PRACH pilot in an MsgA in the random access procedure, and the first message is a PUSCH in the MsgA in the random access procedure.

According to the access method in the embodiment of the present disclosure, no matter whether the four-step RACH or the two-step RACH is adopted by the UE, the UE type of the UE is indicated in the first pilot and/or the first message in accordance with the predefined mode and/or indication information, so it is able to determine a report occasion for the UE type.

In a possible embodiment of the present disclosure, the predefined mode is a mode predefined in a standard protocol, and it is used to determine, in an implicit manner, whether or not the UE type needs to be indicated in the random access procedure, and/or whether the UE type is indicated in the first pilot, or the first message, or both the first pilot and the first message. The indication information is indicated by the network device, e.g., through the SIB1. Through indicating by the network device, the indication information is used to indicate whether or not the UE type needs to be indicated in the random access procedure, and/or determine whether the UE type is indicated in the first pilot, or the first message, or both the first pilot and the first message.

In a possible embodiment of the present disclosure, in S210, the UE type of the UE is indicated in the first pilot and/or the first message in accordance with the predefined mode and/or indication information through at least one of indicating the UE type of the UE in the first pilot in accordance with a first predefined mode; indicating the UE type of the UE in the first message in accordance with a second predefined mode; indicating the UE type of the UE in the first pilot and the first message in a third predefined mode; indicating the UE type of the UE in the first pilot in accordance with a fourth predefined mode, and indicating the UE type of the UE in the first message in accordance with first indication information; indicating the UE type of the UE in the first pilot in accordance with second indication information, and indicating the UE type of the UE in the first message in accordance with a fifth predefined mode; indicating the UE type of the UE in the first pilot and/or the first message in accordance with third indication information; or indicating the UE type of the UE in the random access procedure in accordance with fourth indication information, and indicating the UE type of the UE in the first pilot or the first message in accordance with a sixth predefined mode.

In the embodiments of the present disclosure, based on the above, in order to indicate the UE type of the UE in the first pilot and/or first message in accordance with determination results when the first pilot and the first message are transmitted in the random access procedure, whether or not the UE type is to be indicated in the first pilot and whether or not the UE type is to be indicated in the first message are determined through at least one of determining whether or not the UE type is to be indicated in the first pilot in accordance with the predefined mode, and determining whether or not the UE type is to be indicated in the first message in accordance with the predefined mode; determining whether or not the UE type is to be indicated in the first pilot in accordance with the predefined mode, and determining whether or not the UE type is to be indicated in the first message in accordance with the indication information; determining whether or not the UE type is to be indicated in the first pilot in accordance with the indication information, and determining whether or not the UE type is to be indicated in the first message in accordance with the predefined mode; or determining whether or not the UE type is to be indicated in the first pilot and the first message in accordance with the indication information.

The implementation of the access method will be described hereinafter in details.

In a possible embodiment of the present disclosure, the indicating the UE type of the UE in the first pilot in accordance with the first predefined mode includes, in the case that the network device has configured a specific PRACH preamble sequence and/or a specific random access occasion for the UE, indicating the UE type of the UE in the first pilot.

During the implementation, in a possible embodiment of the present disclosure, in the first predefined mode, the UE determines whether the network device has configured the specific PRACH preamble sequence (e.g., including a preamble index) and/or the specific random access occasion (i.e., an RO resource), and in the case that the UE determines that the network device has configured the specific PRACH preamble sequence and/or the specific random access occasion, the UE determines that the UE type of the UE is to be indicated in the first pilot. In this way, in the random access procedure, the UE type of the UE is indicated in the first pilot. In a possible embodiment of the present disclosure, when the UE type of the UE is indicated in the first pilot, the UE type of the UE is not to be indicated in the first message.

In a possible embodiment of the present disclosure, in the case that the network device fails to configure the specific PRACH preamble sequence and the specific random access occasion for the UE, the UE determines that the UE type of the UE is not to be indicated in the first pilot. Hence, in the random access procedure, the UE type of the UE is not indicated in the first pilot in the random access procedure.

In another possible embodiment of the present disclosure, the indicating the UE type of the UE in the first message in accordance with the second predefined mode includes at least one of: in the case that the UE type of the UE fails to be indicated in the first pilot, indicating the UE type of the UE in the first message; in the case that a network device fails to configure a specific PRACH preamble sequence and a specific random access occasion for the UE, indicating the UE type of the UE in the first message; in the case that the network device has configured a specific initial uplink BWP for the UE, indicating the UE type of the UE in the first message; in the case that the network device fails to configure the specific PRACH preamble sequence and the specific random access occasion for the UE but has configured the specific initial uplink BWP for the UE, indicating the UE type of the UE in the first message; or in the case that there is no limiting condition, indicating the UE type of the UE in the first message.

During the implementation, whether or not the UE type of the UE needs to be indicated in the first message is determined in accordance with the second predefined mode, and when the UE type of the UE needs to be indicated, the UE type of the UE is indicated in the first message in the random access procedure.

In a possible embodiment of the present disclosure, in one way, the second predefined mode includes determining whether or not the UE type of the UE is to be indicated in the first message in accordance with whether or not the UE type of the UE is to be indicated in the first pilot.

To be specific, in the case that the UE type of the UE fails to be indicated in the first pilot, the UE type of the UE is indicated in the first message. In a possible embodiment of the present disclosure, in the case that the UE type of the UE is indicated in the first pilot, the UE type of the UE is not indicated in the first message.

In a possible embodiment of the present disclosure, in another way, the second predefined mode includes determining whether or not the UE type of the UE is to be indicated in the first message in accordance with whether or not the network device has configured the specific PRACH preamble sequence and/or the specific random access occasion for the UE.

To be specific, in the case that the network device fails to configure the specific PRACH preamble sequence and the specific random access occasion for the UE, the UE type of the UE is indicated in the first message. In a possible embodiment of the present disclosure, in the case that the network device has configured to the specific PRACH preamble sequence and the specific random access occasion for the UE, the UE type of the UE is indicated in the first pilot rather than in the first message.

In a possible embodiment of the present disclosure, in yet another way, the second predefined mode includes determining whether or not the UE type of the UE is indicated in the first message in accordance with whether or not the network device has configured the specific initial uplink BWP for the UE.

To be specific, in the case that the network device has configured the specific initial uplink BWP for the UE, the UE type of the UE is indicated in the first message. In a possible embodiment of the present disclosure, the UE type of the UE is not indicated in the first pilot.

In a possible embodiment of the present disclosure, in the case that the network device fails to configure the specific initial uplink BWP for the UE, the UE type of the UE is not indicated in the first message. In a possible embodiment of the present disclosure, the UE type of the UE is not indicated in the first pilot either.

In a possible embodiment of the present disclosure, in still yet another way, the second predefined mode includes determining whether or not the UE type of the UE is indicated in the first message in accordance with whether or not the network device has configured the specific PRACH preamble sequence and/or the specific random access occasion and the specific initial uplink BWP for the UE.

To be specific, in the case that the network device fails to configure the specific PRACH preamble sequence and the specific random access occasion for the UE but the UE has configured the specific initial uplink BWP for the UE, the UE type of the UE is indicated in the first message. In a possible embodiment of the present disclosure, the UE type of the UE is not indicated in the first pilot.

In a possible embodiment of the present disclosure, in the case that the network device fails to configure the specific PRACH preamble sequence and the specific random access occasion for the UE and fails to configure the specific initial uplink BWP for the UE, the UE type of the UE is not indicated in the first message. In a possible embodiment of the present disclosure, the UE type of the UE is not indicated in the first pilot either.

It should be appreciated that, the determining whether or not the network device has configured the specific PRACH preamble sequence and/or the specific random access occasion for the UE is a predefined mode for determining whether or not the UE type of the UE is indicated in the first pilot, so the above implementation mode may be also considered as to include determining whether or not the UE type of the UE is indicated in the first message in accordance with whether or not the UE type of the UE is indicated in the first pilot and whether or not the network device has configured the specific initial uplink BWP for the UE. To be specific, in the case that the UE type of the UE fails to be indicated in the first pilot and the network device has configured the specific initial uplink BWP for the UE, the UE type of the UE is indicated in the first message. In the case that the UE type of the UE is indicated in the first pilot or the network device fails to configure the specific initial uplink BWP for the UE, the UE type of the UE is not indicated in the first message.

In still yet another way, the second predefined mode includes indicating the UE type of the UE in the first message in the case that there is no limiting condition, i.e., the UE type of the UE is always indicated in the first message in any cases.

In the embodiments of the present disclosure, in step S210, the indicating the UE type of the UE in the first pilot and the first message in accordance with the third predefined mode includes: in the case that a network device has configured a specific PRACH preamble sequence and/or a specific random access occasion for the UE, indicating the UE type of the UE in the first pilot, and in the case that the network device has configured a specific initial uplink BWP for the UE, indicating the UE type of the UE in the first message; or in the case that the network device has configured the specific PRACH preamble sequence and/or the specific random access occasion for the UE, indicating the UE type of the UE in the first pilot, and in the case that whether or not the UE type of the UE is indicated in the first pilot is not taken into consideration, indicating the UE type of the UE in the first message.

The UE type of the UE is indicated in both the first pilot and the first message in one of the above-mentioned ways in accordance with the third predefined mode.

In a possible embodiment of the present disclosure, in one way, in step S210, the UE type of the UE is indicated in the first pilot in accordance with the fourth predefined mode, and the UE type of the UE is indicated in the first message in accordance with the first indication information. To be specific, the UE type of the UE is indicated in the first pilot in accordance with the fourth predefined mode includes, in the case that the network device fails to configure the specific PRACH preamble sequence and/or the specific random access occasion for the UE, indicating the UE type of the UE in the first pilot. The indicating the UE type of the UE in the first message in accordance with the first indication information includes, in the case that the first indication information indicates that a UE type is to be indicated in the first message, indicating the UE type of the UE in the first message.

During the implementation, whether or not the UE type of the UE is indicated in the first pilot is determined in accordance with the fourth predefined mode. In the case that the network device has configured the specific PRACH preamble sequence and/or the specific random access occasion for the UE, the UE type of the UE is indicated in the first pilot. In a possible embodiment of the present disclosure, in the case that the network device fails to configure the specific PRACH preamble sequence or the specific random access occasion for the UE, the UE type of the UE is not indicated in the first pilot. Whether or not the UE type of the UE is to be indicated in the first message is determined in accordance with the first indication information. In the case that the first indication information indicates that the UE type is to be indicated in the first message, the UE type of the UE is indicated in the first message. In the case that the first indication information indicates that the UE type is not to be indicated in the first message or fails to indicate that the UE type is to be indicated in the first message, or the network device fails to transmit the first indication information, the UE type of the UE is not indicated in the first message.

In the embodiments of the present disclosure, in step S210, the UE type of the UE is indicated in the first pilot in accordance with the second indication information, and the UE type of the UE is indicated in the first message in accordance with the fifth predefined mode. To be specific, the indicating the UE type of the UE in the first pilot in accordance with the second indication information includes, in the case that the second indication information indicates that a UE type is to be indicated in the first pilot, indicating the UE type of the UE in the first pilot. The indicating the UE type of the UE in the first message in accordance with the fifth predefined mode includes at least one of: in the case that the UE type of the UE fails to be indicated in the first pilot, indicating the UE type of the UE in the first message; in the case that a network device has configured a specific initial uplink BWP for the UE, indicating the UE type of the UE in the first message; in the case that the UE type of the UE fails to be indicated in the first pilot and the network device has configured the specific initial uplink BWP for the UE, indicating the UE type of the UE in the first message; or in the case that there is no limiting condition, indicating the UE type of the UE in the first message.

During the implementation, whether or not the UE type of the UE is to be indicated in the first pilot is determined in accordance with the second indication information. In the case that the second indication information indicates that the UE type is to be indicated in the first pilot, the UE type of the UE is indicated in the first pilot. In the case that the second indication information fails to indicate that the UE type is indicated in the first pilot or indicates that the UE type does not need to be indicated in the first pilot, or the network device fails to transmit the second indication information, the UE type of the UE is not indicated in the first pilot.

Whether or not the UE type of the UE is indicated in the first message is determined in accordance with the fifth predefined mode. In one way, whether or not the UE type of the UE is indicated in the first message in accordance with whether or not the UE type of the UE is indicated in the first pilot. In the case that the UE type of the UE is not indicated in the first pilot, the UE type of the UE is indicated in the first message, and in the case that the UE type of the UE is indicated in the first pilot, the UE type of the UE is not indicated in the first message.

In another way, whether or not the UE type of the UE is indicated in the first message is determined in accordance with whether or not the network device has configured the specific initial uplink BWP for the UE. In the case that the network device has configured the specific initial uplink BWP for the UE, the UE type of the UE is indicated in the first message. In a possible embodiment of the present disclosure, in the case that the network device fails to indicate the specific initial uplink BWP for the UE, the UE type of the UE is not indicated in the first message.

In yet another way, whether or not the UE type of the UE is indicated in the first message is determined in accordance with whether or not the UE type of the UE is indicated in the first pilot and whether or not the network device has configured the specific initial uplink BWP for the UE. In the case that the UE type of the UE fails to be indicated in the first pilot and the network device has configured the specific initial uplink BWP for the UE, the UE type of the UE is indicated in the first message. In a possible embodiment of the present disclosure, in the case that the UE type of the UE is indicated in the first pilot or the network device fails to configure the specific initial uplink BWP for the UE, the UE type of the UE is not indicated in the first message.

In still yet another mode, the UE type of the UE is always indicated in the first message in the case that there is no limiting condition.

In the embodiments of the present disclosure, in step S210, the indicating the UE type of the UE in the first pilot and/or the first message in accordance with the third indication information includes at least one of: in the case that the third indication information indicates that a UE type is to be indicated merely in the first pilot, indicating the UE type of the UE in the first pilot (in a possible embodiment of the present disclosure, the UE type of the UE is not indicated in the first message); in the case that the third indication information indicates that a UE type is to be indicated merely in the first message, indicating the UE type of the UE in the first message (in a possible embodiment of the present disclosure, the UE type of the UE is not indicated in the first pilot); in the case that the third indication information indicates that a UE type is to be indicated in the first pilot and the first message, indicating the UE type of the UE in the first pilot and the first message; or in the case that the third indication information indicates that no UE type is to be indicated in the first pilot and the first message, not indicating the UE type of the UE in the first pilot and the first message.

In a possible embodiment of the present disclosure, the indication information further includes relevant information about the reporting of the UE type, e.g., a resource for reporting the UE type, such as a Logical Channel Identity (LCID) used when the UE type is reported through a first message Msg3.

In the embodiments of the present disclosure, in step S210, the UE type of the UE is indicated in the random access procedure in accordance with the fourth indication information, and the UE type of the UE is indicated in the first pilot or first message in accordance with the sixth predefined mode. To be specific, the indicating the UE type of the UE in the random access procedure in accordance with the fourth indication information includes, in the case that the fourth indication information indicates that the UE type of the UE is to be indicated in the random access procedure, indicating the UE type of the UE in the random access procedure in accordance with the fourth indication information. The indicating the UE type of the UE in the first pilot or the first message in accordance with the sixth predefined mode includes: in the case that a network device has configured a specific PRACH preamble sequence and/or a specific random access occasion for the UE, indicating the UE type of the UE in the first pilot; or in the case that the network device fails to configure the specific PRACH preamble sequence and the specific random access occasion for the UE, indicating the UE type of the UE in the first message; or in the case that the UE type of the UE fails to be indicated in the first pilot, indicating the UE type of the UE in the first message.

During the implementation, in the case that the fourth indication information indicates that the UE type of the UE is to be indicated in the random access procedure, the UE type of the UE is indicated in the first pilot or first message in accordance with the sixth predefined mode. In the case that the fourth indication information fails to indicate that the UE type of the UE is to be indicated in the random access procedure or indicates that the UE type of the UE is not to be indicated in the random access procedure, the UE type of the UE is not indicated in the first pilot and the first message.

In the embodiments of the present disclosure, in step S210, the UE type of the UE is indicated in the first pilot through using, by the first pilot, a PRACH preamble sequence specific for the UE, and/or transmitting the first pilot in a random access occasion specific for the UE. The UE type of the UE is indicated in the first message through carrying a logic channel identifier specific for the UE in the first message.

To be specific, when the first pilot uses the PRACH preamble sequence specific for the UE and/or the first pilot is transmitted in the random access occasion specific for the UE, the UE type of the UE indicated in the first pilot is an RedCap UE type. In addition, when the logical channel identity specific for the UE is carried in the first message, the UE type of the UE indicated in the first message is an RedCap UE type.

In the embodiments of the present disclosure, the RedCap UE type is taken as an example. Actually, the UE type may also be any other UE type, such as a different service type, e.g., a Small Data Transmission (SDT) service or a non-SDT service, or a UE type supporting or not supporting random access network service slicing. Different UE types also include a combination of different bandwidths, different quantities of antennae and different service types.

It should be appreciated that, in the embodiments of the present disclosure, the access method may be applied to four-step RACH or two-step RACH.

When the access method is applied to the four-step RACH, in the above-mentioned embodiments of the present disclosure, the first pilot is a PRACH pilot in the random access procedure, and the first message is an Msg3 in the random access procedure. When the access method is applied to the two-step RACH, in the above-mentioned embodiments of the present disclosure, the first pilot is a PRACH pilot in an MsgA in the random access procedure, and the first message is a PUSCH in the MsgA in the random access procedure.

When the access method is applied to the four-step RACH and the two-step RACH, the implementation of indicating the UE type of the UE in the first pilot and/or the first message in accordance with the predefined mode and/or the indication information may refer to that mentioned hereinabove, and thus will not be particularly defined herein.

The access method will be described hereinafter in details in conjunction with the embodiments.

### First Embodiment

In this embodiment, the description about determining whether or not the UE type of the UE is indicated in the first pilot (i.e., Msg1) in accordance with the predefined mode and determining whether or not the UE type of the UE is indicated in the first message (i.e., Msg3) in accordance with the predefined mode will be given by taking the four-step RACH as an example.

In this embodiment, the network device does not need to broadcast any specific indication information for indicating the UE to report the UE type. The UE determines a stage for reporting the UE type in accordance with the predefined mode and the RACH configuration information about the UE, and/or configuration information for configuring the specific initial uplink BWP for the UE, i.e., the UE determines whether the UE type of the UE is indicated in the Msg1 or in the Msg3.

In the embodiments of the present disclosure, such expressions as "reporting the UE type", "indicating the UE type" and "identifying the UE type" have a similar meaning. Essentially, through a specific transmission mode/content, the network device identifies a type of the UE. Unless otherwise specified, it is unnecessary to differentiate these expressions from each other.

In this embodiment, in a first implementation mode, whether or not the UE type of the UE is indicated in the first pilot is determined in accordance with the first predefined mode. In other words, in the case that the network device has configured the specific PRACH preamble sequence and/or the specific random access occasion for the UE, the UE type of the UE is indicated in the first pilot.

Usually, the network device (e.g., a gNB) broadcasts resource configuration information for initiating, by a common UE, a random access, so as to indicate RO resources and a set of preambles to be used by the common UE. The RedCap UE and the common UE share the RO resources and the set of preamble indices. However, the gNB also configures the RO resources and/or the set of preamble indices specific for the RedCap UE. For example, the gNB broadcasts RACH resource configuration information specific for the RedCap UE, and the RACH resource configuration information indicates at least one of the RO resources specific for the RedCap UE or the set of preambles specific for the RedCap UE.

When the gNB broadcasts the RACH resource configuration information specific for the RedCap UE, the RedCap UE should initiate the random access using the RO and/or the preamble indices specific for the RedCap UE. Correspondingly, when the gNB has received a preamble from a UE in the RO specific for the RedCap UE, or a preamble index detected by the gNB is the preamble index specific for the RedCap UE, the gNB determines that the UE initiating the random access is the RedCap UE, so as to identify the RedCap UE.

Hence, as a method for determining whether the UE type is indicated in the Msg1, whether the UE type is indicated in the Msg1 is determined in accordance with whether or not the gNB has configured the RO resources and/or preamble indices specific for the RedCap UE. When the gNB has configured the RO resources and/or preamble indices specific for the RedCap UE, the UE type is indicated in the Msg1, otherwise the UE type is not indicated in the Msg1.

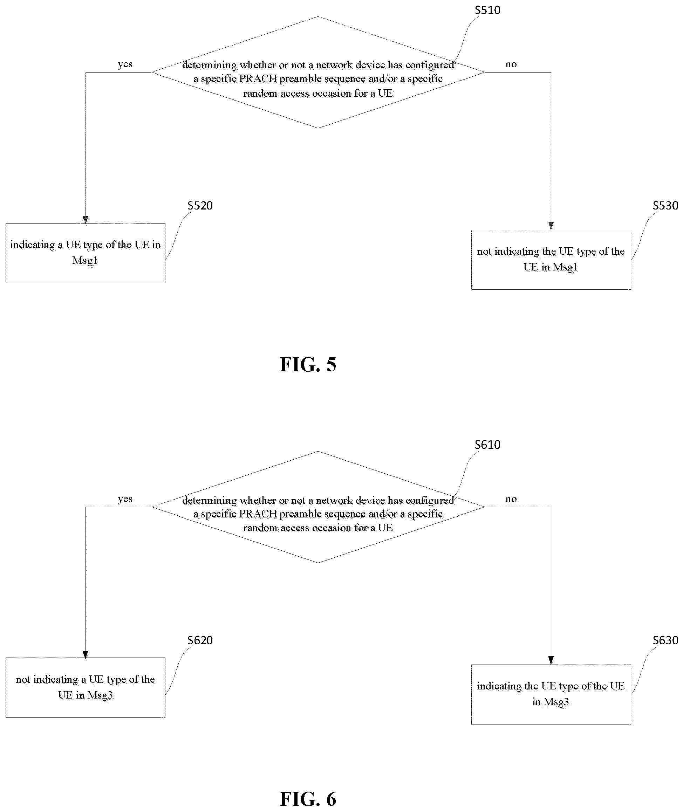

As shown in FIG. 5, an implementation process of the access method includes the following steps.

S510: determining whether or not the network device has configured the specific PRACH preamble sequence and/or the specific random access occasion for the UE, when a determination result is yet, proceeding to S520, and when the determination result is no, proceeding to S530.

S520: indicating the UE type of the UE in the Msg1.

S530: not indicating the UE type of the UE in the Msg1.

Based on the above, whether or not the UE type of the UE is indicated in the Msg1 is determined in accordance with the predefined mode, so as to reduce an overhead caused when the gNB indicates the UE whether or not to report the UE type at an Msg1 transmission stage.

In this embodiment of the present disclosure, in a second implementation mode, whether or not the UE type of the UE is indicated in the first message (i.e., Msg3) is determined in accordance with the second predefined mode.

To be specific, the indicating the UE type of the UE in the first message in accordance with the second predefined mode includes at least one of: in the case that the UE type of the UE fails to be indicated in the first pilot, indicating the UE type of the UE in the first message; in the case that the network device fails to configure the specific PRACH preamble sequence and the specific random access occasion for the UE, indicating the UE type of the UE in the first message; in the case that the network device has configured the specific initial uplink BWP for the UE, indicating the UE type of the UE in the first message; in the case that the network device fails to configure the specific PRACH preamble sequence and the specific random access occasion for the UE but has configured the specific initial uplink BWP for the UE, indicating the UE type of the UE in the first message; or in the case that there is not limiting condition, indicating the UE type of the UE in the first message. To be specific, different from the Msg1, a transmission resource for the Msg3 is dynamically scheduled through information in an Msg2. The determining whether or not to indicate the UE type of the UE at an Msg3 stage in accordance with the second predefined mode includes the following modes.

First mode: determining whether or not to report the UE type at the Msg3 stage in accordance with whether or not to report the UE type at the Msg1 stage.

In order to identify the RedCap UE, usually, the RedCap UE merely needs to be identified at one of the Msg1 stage or the Msg3 stage. Hence, as a feasible method, when the RedCap UE does not the report the UE type at the Msg1 stage, it determines that the EU type is to be reported at the Msg3 stage. Otherwise, when the UE type is reported at the Msg1 stage, the UE type is not reported at the Msg3 stage.

Referring to the above-mentioned method for determining that the UE type of the UE is reported in the Msg1 in accordance with the first predefined mode, whether or not the UE type is reported at the Msg3 stage is also determined in accordance with whether or not the gNB has configured the RO resources and/or preamble indices specific for the RedCap UE. When the gNB has configured the RO resources and/or preamble indices specific for the RedCap UE, the UE type is not reported at the Msg3 stage (but reported at the Msg1 stage); otherwise, the UE type is reported at the Msg3 stage (and not reported at the Msg1 stage).

As shown in FIG. 6, an implementation process of the access method includes the following steps.

S610: determining whether or not the network device has configured the specific PRACH preamble sequence and/or the specific random access occasion for the UE, when a determination result is yes, proceeding to S620, and when the determination result is no, proceeding to S630.

S620: not indicating the UE type of the UE in the Msg3.

S630: indicating the UE type of the UE in the Msg3.

Second mode: determining whether or not to indicate the UE type of the UE in the Msg3 in accordance with whether or not the gNB has configured the initial uplink BWP specific for the RedCap UE.

Generally speaking, the gNB broadcasts configuration information about an initial downlink BWP and the initial uplink BWP used by the common UE, and the common UE completes the random access procedure on the initial downlink BWP and the initial uplink BWP, including receiving an Msg2 and an Msg4 on the initial downlink BWP and transmitting the Msg3 on the initial uplink BWP. The RedCap UE and the common UE share the initial downlink BWP and the initial uplink BWP. However, the gNB also configures a specific initial downlink BWP and/or a specific initial uplink BWP for the RedCap UE. For example, the gNB broadcasts configuration information about the initial downlink BWP and/or the initial uplink BWP specific for the RedCap UE, so as to indicate a frequency range of the initial downlink BWP and a frequency range of the initial uplink BWP.

When the gNB broadcasts the initial downlink BWP specific for the RedCap UE, the RedCap UE receives the Msg2 on the initial downlink BWP specific for the RedCap UE, so as to obtain scheduling indication information for the Msg3. When the gNB broadcasts the initial uplink BWP specific for the RedCap UE, the RedCap UE transmits the Msg3 on the initial uplink BWP specific for the RedCap UE. In a word, when the RedCap UE and the common UE share the initial downlink BWP and the initial uplink BWP, it means that the gNB considers that it is unnecessary to identify the RedCap UE at an initial access stage, and at this time, it is also unnecessary to identify the RedCap UE at the Msg3 stage. Otherwise, the UE type is reported at the Msg3 stage.

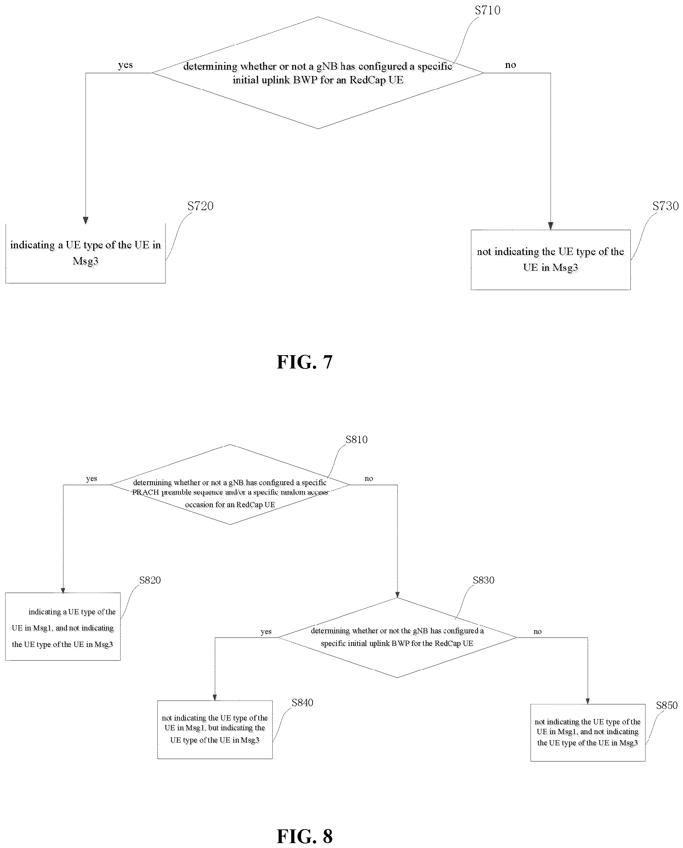

As shown in FIG. 7, an implementation process of the access method includes the following steps.

S710: determining whether or not the gNB has configured the initial uplink BWP specific for the RedCap UE, when a determination result is yes, proceeding to S720, and when the determination result is no, proceeding to S730.

S720: indicating the UE type of the UE in the Msg3.

S730: not indicating the UE type of the UE in the Msg3.

Third mode: determining whether or not to indicate the UE type in the Msg3 in accordance with whether or not the UE type is to be reported at the Msg1 stage and whether or not the gNB has configured the initial uplink BWP specific for the RedCap UE.

The third mode is just a combination of the reporting modes in the first mode and the second mode. To be specific, when the RedCap UE does not report the UE type at the Msg1 stage and the gNB has configured the initial uplink BWP specific for the RedCap UE, the UE type is reported at the Msg3 stage. Otherwise, when the UE type is reported at the Msg1 stage or the gNB fails to configure the initial uplink BWP specific for the RedCap UE, the UE type is not reported at the Msg3 stage.

As shown in FIG. 8, an implementation process of the access method includes the following steps.

S810: determining whether or not the gNB has configured the specific PRACH preamble sequence and/or the specific random access occasion for the RedCap UE, when a determination result is yes, proceeding to S820, and when the determination result is no, proceeding to S830.

S820: indicating the UE type of the UE in the Msg1, and not indicating the UE type of the UE in the Msg3.

S830: determining whether or not the gNB has configured the specific initial uplink BWP for the RedCap UE, when a determination result is yes, proceeding to S840, and when the determination result is no, proceeding to S850.

S840: not indicating the UE type of the UE in the Msg1, but indicating the UE type of the UE in the Msg3.

S850: not indicating the UE type of the UE in the Msg1, and not indicating the UE type of the UE in the Msg3.

Fourth mode: in the case that there is no limiting condition, always indicating the UE type of the UE in the Msg3.

In the mode of indicating the UE type through the Msg3, a specific state of an LCID carried in the Msg3 is used to indicate the UE type, e.g., at least one state in the LCID is used to indicate that the UE type is an RedCap UE. In a communication system, the LCID is a high-layer information, i.e., information related to a Packet Data Convergence Protocol (PDCP) layer or a Medial Access Control (MAC) layer. The transmission of the Msg1 and MSg3 is a behavior at a physical layer. The cross-layer interaction (e.g., the LCID for the Msg3 is determined in accordance with whether or not the UE type is to identified at the Msg1 stage) may lead to an increase in the complexity of the UE and the gNB, so it is especially adverse to a decrease in the cost and complexity of the RedCap UE.

Hence, in the embodiments of the present disclosure, as a feasible method, the RedCap UE always indicates the UE type of the UE in the Msg3 no matter whether the UE type of the UE is indicated in the Msg1.

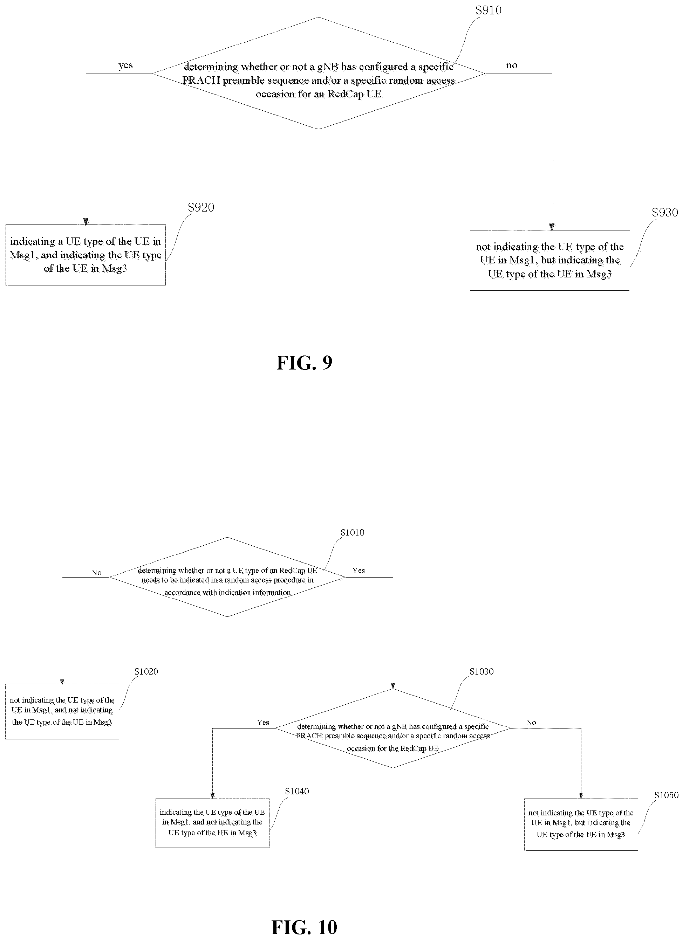

In the embodiments of the present disclosure, as shown in FIG. 9, an implementation process obtained through combining the mode of determining whether or not to indicate the UE type of the UE in the Msg3 with the mode of determining whether or not to indicate the UE type of the UE in the Msg1 includes the following steps.

S910: determining whether or not the gNB has configured the specific PRACH preamble sequence and/or the specific random access occasion for the RedCap UE, when a determination result is yes, proceeding to S920, and when the determination result is no, proceeding to S930.

S920: indicating the UE type of the UE in the Msg1, and indicating the UE type of the UE in the Msg3.

S930: not indicating the UE type of the UE in the Msg1, but indicating the UE type of the UE in the Msg3.

Based on the above, the RedCap UE always indicates the UE type of the UE in the Msg3 no matter whether the UE type of the UE is indicated in the Msg1. In this way, it is able for the RedCap UE to reduce the cross-layer interaction when it is necessary to determine the stage for indicating the UE type, thereby to reduce the complexity.

Further, according to the access method in the embodiments of the p-resent disclosure, it is able for the RedCap UE to determine whether or not to indicate the UE type at the Msg1 transmission stage and/or the Msg3 transmission stage without any necessity to introduce any indication information, thereby to identify the UE type and meanwhile reduce an indication overhead.

### Second Embodiment

In this embodiment, the description about determining whether or not the UE type of the UE is indicated in the first pilot (i.e., Msg1) in accordance with the predefined mode and determining whether or not the UE type of the UE is indicated in the first message (i.e., Msg3) in accordance with the indication information will be given by taking the four-step RACH as an example.

In this embodiment, for the UE, whether or not the UE type of the UE is indicated in the Msg1 is determined in accordance with an implicit mode, and whether or not the UE type of the UE is indicated in the Msg3 is determined in accordance with the indication information.

The determining whether or not the UE type of the UE is indicated in the Msg1 in accordance with the predefined mode may refer to that mentioned in the first embodiment, and thus will not be particularly defined herein.

Further, in this embodiment, whether or not the RedCap UE "indicates the UE type in the Msg3) is determined in accordance with the indication information from the gNB.

For example, the gNB broadcasts the indication information through a system message, e.g., the indication information is included in an SIB1. Upon the receipt of the indication information, the RedCap UE determines whether or not to indicate the UE type in the Msg3 in accordance with the indication information. In a possible embodiment of the present disclosure, the RedCap UE further determines how to indicate the UE type in the Msg3.

To be specific, as a possible method, an LCID used by the RedCap UE for indicating the UE type is specified through the predefined mode, e.g., a value of the LCID used by the RedCap UE in the Msg3 is specified in a protocol. In this way, the indication information merely needs to indicate "whether or not the RedCap UE indicates the UE type in the Msg3".

For example, the indication information merely includes 1-bit information, and when a value of the 1-bit information is 0 or 1, it indicates that the UE type needs to be indicated in the Msg3 or the UE type does not need to be indicated in the Msg3. Alternatively, the indication information includes information whose values are two states for indicating that the UE type needs to be indicated in the Msg3 and the UE type does not need to be indicated in the Msg3 respectively. Alternatively, the indication information merely indicates that the UE type needs to be indicated in the Msg3, and when the SIB1 does not include the indication information, it means that the UE type does not need to be indicated in the Msg3.

To be specific, as another possible method, the LCID used by the RedCap UE for indicating the UE type is not one LCID predefined in the protocol, and instead, it includes a plurality of LCIDs predefined in the protocol, or the LCID is not predefined in the protocol. In this case, the indication information not only indicates whether or not the RedCap UE needs to indicate the UE type in the Msg3, but also indicates the LCID used by the RedCap UE for indicating the UE type.

For example, when N number of LCIDs (LCID_1, LCID 2, ..., LCID_N) are predefined in the protocol for indicating the reported UE type, the indication information indicates one of a plurality of states representing LCID_1, LCID_2, ..., LCID_N. When the indication information indicates LCID_X, the RedCap UE reports an X^{th} LCID in the Msg3 so as to indicate the UE type. When the indication information indicates that the UE type is not to be indicated or the SIB1 does not include any indication information, it means that the UE type does not need to be indicated in the Msg3.

For example, when no LCID is predefined in the protocol, the indication information indicates a value of the LCID used by the RedCap UE when indicating the UE type. When the value of the LCID used by the RedCap UE is indicated, the RedCap UE reports the indicated LCID in the Msg3 so as to indicate the UE type. When the indication information indicates that the UE type is not to be indicated or the SIB1 does not include the indication information, it means that the UE type does not need to be indicated in the Msg3.

In a word, according to the access method in this embodiment of the present disclosure, when indicating the UE type in the Msg1, it is unnecessary to introduce the indication information, and when indicating the UE type in the Msg3, whether or not the UE type needs to be reported is indicated through the indication information. The indication information further includes relevant indication information for reporting the LCID in the Msg3. In this way, it is able to realize a tradeoff between an indication overhead and indication flexibility.

### Third Embodiment

In this embodiment, the description about determining whether or not the UE type of the UE is indicated in the first pilot (i.e., Msg1) in accordance with the indication information and determining whether or not the UE type of the UE is indicated in the first message (i.e., Msg3) in accordance with the predefined mode will be given by taking the four-step RACH as an example.

In this embodiment, whether or not the RedCap UE indicates the UE type in the Msg1 is determined in accordance with the indication information from the gNB.

For example, the gNB broadcasts the indication information through a system message, e.g., the indication information is included in an SIB1. Upon the receipt of the indication information, the RedCap UE determines whether or not to indicate the UE type in the Msg1 in accordance with the indication information. In a possible embodiment of the present disclosure, the RedCap UE further determines how to indicate the UE type in the Msg1.

To be specific, as a possible method, the indication information merely needs to indicate whether or not the RedCap UE indicates the UE type in the Msg1. When the RedCap UE determines that the UE type needs to be indicated in the Msg1 in accordance with the indication information, a random access is initiated using RO resources and/or preamble indices specific for the RedCap UE. The used RO resources and/or preamble indices specific for the RedCap UE are predefined, or determined in accordance with RO resources and/or preamble indices specific for the RedCap UE which have actually been configured by the gNB.

For example, the indication information merely includes 1-bit information, and when a value of the 1-bit information is 0 or 1, it indicates that the UE type needs to be indicated in the Msg1 or the UE type does not need to be indicated in the Msg1. Alternatively, the indication information includes information whose values are two states for indicating that the UE type needs to be indicated in the Msg1 and the UE type does not need to be indicated in the Msg1 respectively. Alternatively, the indication information merely indicates that the UE type needs to be indicated in the Msg1, and when the SIB1 does not include the indication information, it means that the UE type does not need to be indicated in the Msg1.

To be specific, as another possible method, the indication information not only indicates whether or not the RedCap UE needs to indicate the UE type in the Msg1, but also indicates how to indicate the UE type in the Msg1 by the RedCap UE.

For example, the indication information indicates the RedCap UE to use one of the following three modes to initiate the random access: initiating the random access through the RO resources specific for the RedCap UE, initiating the random access through the preamble indices specific for the RedCap UE, and initiating the random access through the RO resources and the preamble indices specific for the RedCap UE. When the indication information indicates that the UE type is not to be reported or the SIB1 does not include the indication information, it means that the UE type does not need to be indicated in the Msg1.

In this embodiment of the present disclosure, a way of determining whether or not to indicate the UE type of the UE in the first message (i.e., the Msg3) in accordance with the predefined mode is the same as that of determining whether or not to indicate the UE type of the UE in the Msg3 in the first embodiment, and thus will not be particularly defined herein.

In a word, according to the access method in this embodiment of the present disclosure, when indicating the UE type in the Msg3, it is unnecessary to introduce the indication information, and when indicating the UE type in the Msg1, whether or not the UE type needs to be reported is indicated through the indication information. The indication information further includes a mode for indicating the UE type in the Msg1 (i.e., one of initiating the random access through the RO resources specific for the RedCap UE, initiating the random access through the preamble indices specific for the RedCap UE, and initiating the random access through the RO resources and the preamble indices specific for the RedCap UE). In this way, it is able to realize a tradeoff between an indication overhead and indication flexibility.

### Fourth Embodiment

In this embodiment, the description about determining whether or not the UE type of the UE is indicated in the first pilot (i.e., Msg1) in accordance with the indication information and determining whether or not the UE type of the UE is indicated in the first message (i.e., Msg3) in accordance with the indication information will be given by taking the four-step RACH as an example.

In this embodiment of the present disclosure, whether or not the UE indicates the UE type in the Msg1 and whether or not the UE indicates the UE type in the Msg3 are both indicated through the indication information. To be specific, a method of indicating the UE to report the UE type in the Msg3 in accordance with the indication information may refer to that in the second embodiment, and a method of indicating the UE to report the UE type in the Msg1 in accordance with the indication information may refer to that in the third embodiment, which will thus not be particularly defined herein.

For example, the indication information indicates one of the following pieces of candidate information: (1) indicating, by the UE, the UE type in the Msg1; (2) indicating, by the UE, the UE type in the Msg3; or (3) indicating, by the UE, the UE type in both the Msg1 and the Msg3. The UE indicates the UE type in the Msg1 and/or the Msg3 in accordance with the indication information. In a possible embodiment of the present disclosure, the indication information further indicates candidate information (4) not indicating the UE type in the Msg1 and the Msg3, and at this time, the UE does not indicate the UE in the Msg1 and the Msg3. Alternatively, when the network device fails to transmit the indication information, the UE does not indicate the UE type in the Msg1 and the Msg3.

In this embodiment of the present disclosure, whether or not the RedCap UE reports the UE type in the Msg1 and whether or not the RedCap UE reports the UE type in the Msg3 are indicated through one piece of indication information. Moreover, a specific indication mode for indicating the UE type in the Msg1 and/or a specific indication mode for indicating the UE type in the Msg3 are further indicated in the indication information.

According to the access method in this embodiment of the present disclosure, it is able to definitely indicate whether or not the RedCap UE reports the UE type at the initial access stage, indicate a stage at which the UE type is to be reported, and indicate how to report the UE type. Hence, the gNB definitely indicates the RedCap UE to report the UE type at an appropriate stage according to the practical need, so as to improve the indication flexibility to a maximum extent. For example, when the gNB has configured the RO resources and/or preamble indices specific for the RedCap UE for reporting the UE type in the Msg1 but there is a large uplink load for a cell, the gNB indicates the RedCap UE to merely report the UE type at the Msg3 stage. As a result, it is able to reduce the occupied uplink resources, and adjust the reporting in time.

### Fifth Embodiment

In this embodiment, the description about determining whether or not the UE type of the UE is indicated in the random access procedure in accordance with the indication information and determining whether or not the UE type of the UE is indicated in the first pilot (i.e., Msg1) or the first message (i.e., Msg3) in accordance with the predefined mode will be given by taking the four-step RACH as an example.

On one hand, whether or not the UE type of the UE needs to be indicated in the random access procedure is determined in accordance with the indication information.

The indication information merely generally indicates whether or not the UE needs to indicate the UE type in the random access procedure, and does not need to specifically indicate whether the UE reports the UE type in the Msg1 or the Msg3.

For example, the indication information merely includes 1-bit information, and when a value of the 1-bit information is 0 or 1, it indicates that the UE type needs to be indicated in the random access procedure or the UE type does not need to be indicated in the random access procedure. Alternatively, the indication information includes information whose values are two states/statuses for indicating that the UE type needs to be indicated in the random access procedure and the UE type does not need to be indicated in the random access procedure respectively. Alternatively, the indication information merely indicates that the UE type needs to be indicated in the random access procedure, and when the SIB1 does not include the indication information, it means that the UE type does not need to be indicated in the random access procedure.

On the other hand, when the indication information indicates that the UE type needs to be reported in the random access procedure, the UE type is indicated in the Msg1 or the Msg3 in accordance with the predefined mode.

A mode for determining whether or not the UE type is to be indicated in the Msg1 and whether or not the UE type is to be indicated in the Msg3 in accordance with the predefined mode may refer to that mentioned in the first embodiment. In other words, when the indication information indicates that the UE type needs to be indicated in the random access procedure, whether or not the UE type is to be indicated in the Msg1 or the Msg3 is determined in accordance with whether or not the gNB has configured the RO resources and/or preamble indices specific for the RedCap UE. When the gNB has configured the RO resources and/or preamble indices specific for the RedCap UE, the UE type is indicated in the Msg1 rather than the Msg3; otherwise, the UE type is indicated in the Msg3 rather than the Msg1.

To be specific, as shown in FIG. 10, a specific implementation process includes the following steps.

S1010: determining whether or not the UE type of the RedCap UE needs to be indicated in the random access procedure in accordance with the indication information, when a determination result is no, proceeding to S1020, and when the determination result is yes, proceeding to S1030.

S1020: not indicating the UE type of the UE in the Msg1, and not indicating the UE type of the UE in the Msg3.

S1030: determining whether or not the gNB has configured the specific PRACH preamble sequence and/or the specific random access occasion for the RedCap UE, when a determination result is yes, proceeding to S1040, and when the determination result is no, proceeding to S1050.

S1040: indicating the UE type of the UE in the Msg1, and not indicating the UE type of the UE in the Msg3.

S1050: not indicating the UE type of the UE in the Msg1, but indicating the UE type of the UE in the Msg3.

According to the access method in this embodiment of the present disclosure, it is able to definitely indicate whether or not the RedCap UE reports the UE type at the initial access stage, and indicate a stage at which the UE type is to be reported. Hence, the gNB definitely indicates the RedCap UE to report the UE type at an appropriate stage according to the practical need, so as to realize a tradeoff between the flexibility and the indication overhead.

It should be appreciated that, the access method in the first to fifth embodiments of the present disclosure has been described in details when the common UE and the RedCap UE are identified. However, the access method is not limited to be used to identify the RedCap UE, and it may also be used to identify the UE in the other fields, e.g., identify a service type of the UE, or RAN slicing.

In addition, the access method in the first to fifth embodiments of the present disclosure has been described in details by taking the four-step RACH as an example, but it may also be applied to the two-step RACH. When the access method is applied to the two-step RACH, the Msg1 is replaced with a PRACH pilot in an MsgA, the Msg3 is replaced with a PUSCH in the MsgA, and the implementation of the access method is the same as that mentioned hereinabove, which will not be particularly defined herein.

In addition, in the embodiments of the present disclosure, the first predefined mode, the second predefined mode, the third predefined mode, the fourth predefined mode, the fifth predefined mode and the sixth predefined mode are merely used to differentiate the predefined modes in different situations, and they may be collectively called as predefined mode. Identically, the first indication information, the second indication information, the third indication information and the fourth indication information are merely used to differentiate the pieces of indication information in different situations, and they may be collectively called as indication information.

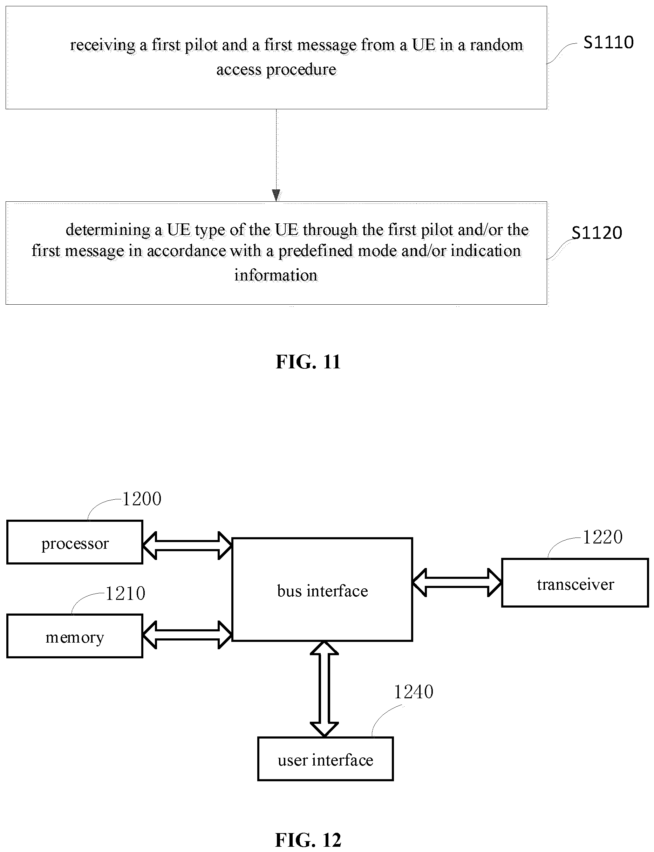

The present disclosure further provides in some embodiments an access method performed by a network device which, as shown in FIG. 11, includes: S1110 of receiving a first pilot and a first message from a UE in a random access procedure; and S1120 of determining a UE type of the UE through the first pilot and/or the first message in accordance with a predefined mode and/or indication information.

According to the access method in the embodiments of the present disclosure, an occasion for indicating, by the UE, the UE type to the network device is determined in accordance with the predefined mode and/or indication information. As a result, it is able to determine a report occasion for reporting, by the RedCap UE, the UE type, thereby to report the UE type of the RedCap UE.

In a possible embodiment of the present disclosure, the determining the UE type of the UE through the first pilot and/or the first message in accordance with the predefined mode and/or indication information includes at least one of determining the UE type of the UE through the first pilot in accordance with a first predefined mode; determining the UE type of the UE through the first message in accordance with a second predefined mode; determining the UE type of the UE through the first pilot and/or the first message in accordance with a third predefined mode; determining the UE type of the UE through the first pilot in accordance with a fourth predefined mode, and determining the UE type of the UE through the first message in accordance with first indication information; determining the UE type of the UE through the first pilot in accordance with second indication information, and determining the UE type of the UE through the first message in accordance with a fifth predefined mode; determining the UE type of the UE through the first pilot and/or the first message in accordance with third indication information; or determining the UE type of the UE in the random access procedure in accordance with fourth indication information, and determining the UE type of the UE through the first pilot or the first message in accordance with a sixth predefined mode.

In a possible embodiment of the present disclosure, the determining the UE type of the UE through the first pilot in accordance with the first predefined mode includes, in the case that the network device has configured a specific PRACH preamble sequence and/or a specific random access occasion for the UE, determining the UE type of the UE through the first pilot.

In a possible embodiment of the present disclosure, the determining the UE type of the UE through the first message in accordance with the second predefined mode includes at least one of: in the case that the UE type of the UE fails to be indicated in the first pilot, determining the UE type of the UE through the first message; in the case that the network device fails to configure a specific PRACH preamble sequence and a specific random access occasion for the UE, determining the UE type of the UE through the first message; in the case that the network device has configured a specific initial uplink BWP for the UE, determining the UE type of the UE through the first message; in the case that the network device fails to configure the specific PRACH preamble sequence and the specific random access occasion for the UE but has configured the specific initial uplink BWP for the UE, determining the UE type of the UE through the first message; or in the case that there is limiting condition, determining the UE type of the UE through the first message.

In a possible embodiment of the present disclosure, the determining the UE type of the UE through the first pilot and/or the first message in accordance with the third predefined mode includes: in the case that the network device has configured a specific PRACH preamble sequence and/or a specific random access occasion for the UE, determining the UE type of the UE through the first pilot, and in the case that the network device has configured a specific initial uplink BWP for the UE, determining the UE type of the UE through the first message; or in the case that the network device has configured the specific PRACH preamble sequence and/or the specific random access occasion for the UE, determining the UE type of the UE through the first pilot, and in the case that there is no limiting condition, determining the UE type of the UE through the first message.

In a possible embodiment of the present disclosure, the determining the UE type of the UE through the first pilot in accordance with the fourth predefined mode includes, in the case that the network device has configured a specific PRACH preamble sequence and/or a specific random access occasion for the UE, determining the UE type of the UE through the first pilot, and the determining the UE type of the UE through the first message in accordance with the first indication information includes, in the case that the first indication information indicates that a UE type is to be indicated in the first message, determining the UE type of the UE through the first message.

In a possible embodiment of the present disclosure, the determining the UE type of the UE through the first pilot in accordance with the second indication information includes, in the case that the second indication information indicates that a UE type is to be indicated in the first pilot, determining the UE type of the UE through the first pilot. The determining the UE type of the UE through the first message in accordance with the fifth predefined mode includes at least one of: in the case that the UE type of the UE fails to be indicated in the first pilot, determining the UE type of the UE through the first message; in the case that the network device has configured a specific initial uplink BWP for the UE, determining the UE type of the UE through the first message; in the case that the UE type of the UE fails to be indicated in the first pilot and the network device has configured the specific initial uplink BWP for the UE, determining the UE type of the UE through the first message; or in the case that there is no limiting condition, determining the UE type of the UE through the first message.

In a possible embodiment of the present disclosure, the determining the UE type of the UE through the first pilot and/or the first message in accordance with the third indication information includes at least one of: in the case that the third indication information indicates that a UE type is to be indicated merely in the first pilot, determining the UE type of the UE through the first pilot; in the case that the third indication information indicates that a UE type is to be indicated merely in the first message, determining the UE type of the UE through the first message; in the case that the third indication information indicates that a UE type is to be indicated in the first pilot and the first message, determining the UE type of the UE through the first pilot and the first message; or in the case that the third indication information indicates that no UE type is to be indicated in the first pilot and the first message, not determining the UE type of the UE through the first pilot and the first message.

In a possible embodiment of the present disclosure, the determining the UE type of the UE in the random access procedure in accordance with the fourth indication information includes, in the case that the fourth indication information indicates that the UE type of the UE is to be indicated in the random access procedure, determining the UE type of the UE in the random access procedure in accordance with the fourth indication information. The determining the UE type of the UE through the first pilot or the first message in accordance with the sixth predefined mode includes: in the case that the network device has configured a specific PRACH preamble sequence and/or a specific random access occasion for the UE, determining the UE type of the UE through the first pilot; or in the case that the network device fails to configure the specific PRACH preamble sequence and the specific random access occasion for the UE, determining the UE type of the UE through the first message; or in the case that the UE type of the UE fails to be indicated in the first pilot, determining the UE type of the UE through the first message.

In a possible embodiment of the present disclosure, the determining the UE type of the UE through the first pilot includes determining the UE type of the UE through receiving the first pilot using a PRACH preamble sequence specific for the UE, and/or determining the UE type of the UE through the first pilot received in a random access occasion specific for the UE. The determining the UE type of the UE through the first message includes determining the UE type of the UE through a logical channel identity specific for the UE carried in the first message.

In a possible embodiment of the present disclosure, the UE type is an RedCap UE type.

In a possible embodiment of the present disclosure, the random access procedure is a four-step random access procedure, the first pilot is a PRACH pilot in the random access procedure, and the first message is an Msg3 in the random access procedure; or the random access procedure is a two-step random access procedure, the first pilot is a PRACH pilot in an MsgA in the random access procedure, and the first message is a PUSCH in the MsgA in the random access procedure.

The implementation of the access method applied to the network device may refer to that of the above-mentioned access method applied to the UE, and thus will not be particularly defined herein.

The present disclosure further provides in some embodiments a UE which, as shown in FIG. 12, includes a memory 1210, a transceiver 1220 and a processor 1200. The memory 1210 is configured to store therein a computer program, the transceiver 1220 is configured to receive and transmit data under the control of the processor 1200, and the processor 1200 is configured to read the computer program in the memory so as to transmit a first pilot and a first message in a random access procedure. A UE type of the UE is indicated in the first pilot and/or the first message in accordance with a predefined mode and/or indication information.

In a possible embodiment of the present disclosure, when indicating the UE type of the UE in the first pilot and/or the first message in accordance with the predefined mode and/or indication information, the processor 1200 is configured to perform at least one of indicating the UE type of the UE in the first pilot in accordance with a first predefined mode; indicating the UE type of the UE in the first message in accordance with a second predefined mode; indicating the UE type of the UE in the first pilot and the first message in a third predefined mode; indicating the UE type of the UE in the first pilot in accordance with a fourth predefined mode, and indicating the UE type of the UE in the first message in accordance with first indication information; indicating the UE type of the UE in the first pilot in accordance with second indication information, and indicating the UE type of the UE in the first message in accordance with a fifth predefined mode; indicating the UE type of the UE in the first pilot and/or the first message in accordance with third indication information; or indicating the UE type of the UE in the random access procedure in accordance with fourth indication information, and indicating the UE type of the UE in the first pilot or the first message in accordance with a sixth predefined mode.

In a possible embodiment of the present disclosure, when indicating the UE type of the UE in the first pilot in accordance with the first predefined mode, the processor 1200 is configured to, in the case that a network device has configured a specific PRACH preamble sequence and/or a specific random access occasion for the UE, indicate the UE type of the UE in the first pilot.

In a possible embodiment of the present disclosure, when indicating the UE type of the UE in the first message in accordance with the second predefined mode, the processor 1200 is configured to perform at least one of: in the case that the UE type of the UE fails to be indicated in the first pilot, indicating the UE type of the UE in the first message; in the case that a network device fails to configure a specific PRACH preamble sequence and a specific random access occasion for the UE, indicating the UE type of the UE in the first message; in the case that the network device has configured a specific initial uplink BWP for the UE, indicating the UE type of the UE in the first message; in the case that the network device fails to configure the specific PRACH preamble sequence and the specific random access occasion for the UE but has configured the specific initial uplink BWP for the UE, indicating the UE type of the UE in the first message; or in the case that there is no limiting condition, indicating the UE type of the UE in the first message.

In a possible embodiment of the present disclosure, when indicating the UE type of the UE in the first pilot and the first message in accordance with the third predefined mode, the processor 1200 is configured to: in the case that a network device has configured a specific PRACH preamble sequence and/or a specific random access occasion for the UE, indicate the UE type of the UE in the first pilot, and in the case that the network device has configured a specific initial uplink BWP for the UE, indicate the UE type of the UE in the first message; or in the case that the network device has configured the specific PRACH preamble sequence and/or the specific random access occasion for the UE, indicate the UE type of the UE in the first pilot, and in the case that whether or not the UE type of the UE is indicated in the first pilot is not taken into consideration, indicate the UE type of the UE in the first message.

In a possible embodiment of the present disclosure, when indicating the UE type of the UE in the first pilot in accordance with the fourth predefined mode, the processor 1200 is configured to, in the case that a network device has configured a specific PRACH preamble sequence and/or a specific random access occasion for the UE, indicate the UE type of the UE in the first pilot, and when indicating the UE type of the UE in the first message in accordance with the first indication information, the processor 1200 is configured to, in the case that the first indication information indicates that a UE type is to be indicated in the first message, indicate the UE type of the UE in the first message.

In a possible embodiment of the present disclosure, when indicating the UE type of the UE in the first pilot in accordance with the second indication information, the processor 1200 is configured to, in the case that the second indication information indicates that a UE type is to be indicated in the first pilot, indicate the UE type of the UE in the first pilot. When indicating the UE type of the UE in the first message in accordance with the fifth predefined mode, the processor 1200 is configured to perform at least one of: in the case that the UE type of the UE fails to be indicated in the first pilot, indicating the UE type of the UE in the first message; in the case that a network device has configured a specific initial uplink BWP for the UE, indicating the UE type of the UE in the first message; in the case that the UE type of the UE fails to be indicated in the first pilot and the network device has configured the specific initial uplink BWP for the UE, indicating the UE type of the UE in the first message; or in the case that there is no limiting condition, indicating the UE type of the UE in the first message.

In a possible embodiment of the present disclosure, when indicating the UE type of the UE in the first pilot and/or the first message in accordance with the third indication information, the processor 1200 is configured to perform at least one of: in the case that the third indication information indicates that a UE type is to be indicated merely in the first pilot, indicating the UE type of the UE in the first pilot; in the case that the third indication information indicates that a UE type is to be indicated merely in the first message, indicating the UE type of the UE in the first message; in the case that the third indication information indicates that a UE type is to be indicated in the first pilot and the first message, indicating the UE type of the UE in the first pilot and the first message; or in the case that the third indication information indicates that no UE type is to be indicated in the first pilot and the first message, not indicating the UE type of the UE in the first pilot and the first message.

In a possible embodiment of the present disclosure, when indicating the UE type of the UE in the random access procedure in accordance with the fourth indication information, the processor 1200 is configured to, in the case that the fourth indication information indicates that the UE type of the UE is to be indicated in the random access procedure, indicate the UE type of the UE in the random access procedure in accordance with the fourth indication information. When indicating the UE type of the UE in the first pilot or the first message in accordance with the sixth predefined mode, the processor 1200 is configured to: in the case that a network device has configured a specific PRACH preamble sequence and/or a specific random access occasion for the UE, indicate the UE type of the UE in the first pilot; or in the case that the network device fails to configure the specific PRACH preamble sequence and the specific random access occasion for the UE, indicate the UE type of the UE in the first message; or in the case that the UE type of the UE fails to be indicated in the first pilot, indicate the UE type of the UE in the first message.

In a possible embodiment of the present disclosure, the UE type of the UE is indicated in the first pilot through using, by the first pilot, a PRACH preamble sequence specific for the UE, and/or transmitting the first pilot in a random access occasion specific for the UE. The UE type of the UE is indicated in the first message through carrying a logical channel identity specific for the UE in the first message.

In FIG. 12, bus architecture may include a number of buses and bridges connected to each other, so as to connect various circuits for one or more processors 1200 and one or more memories 1210. In addition, as is known in the art, the bus architecture may be used to connect any other circuits, such as a circuit for a peripheral device, a circuit for a voltage stabilizer and a power management circuit. A bus interface may be provided, and the transceiver 1220 may consist of a plurality of elements, i.e., a transmitter and a receiver for communication with any other devices over a transmission medium. The transmission medium includes a wireless channel, a wired channel, or an optical cable. With respect to different UEs, a user interface 1240 may also be provided for devices which are to be arranged inside or outside the UE, and these devices may include but not limited to a keypad, a display, a speaker, a microphone and a joystick.

The processor 1200 may take charge of managing the bus architecture as well as general processings. The memory 1210 may store therein data for the operation of the processor 1200.

In a possible embodiment of the present disclosure, the processor 1200 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

The processor is configured to call the computer program in the memory, so as to implement the above-mentioned access method in accordance with obtained executable instructions. The processor may also be physically separated from the memory.

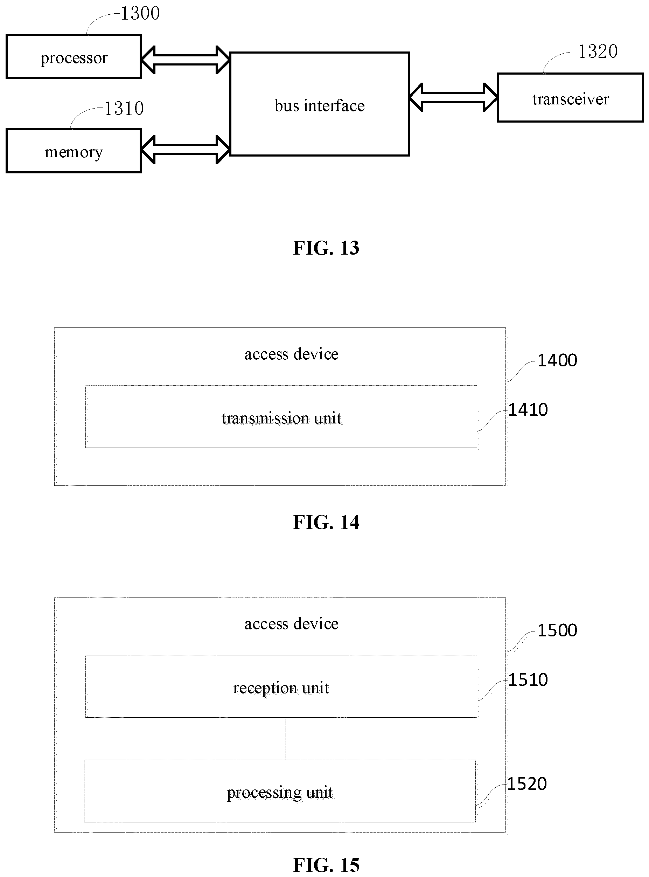

The present disclosure further provides in some embodiments a network device which, as shown in FIG. 13, includes a memory 1310, a transceiver 1320 and a processor 1300. The memory 1310 is configured to store therein a computer program, and the transceiver 1320 is configured to receive and transmit data under the control of the processor. The processor 1300 is configured to read the computer program in the memory so as to: receive a first pilot and a first message from a UE in a random access procedure; and determine a UE type of the UE through the first pilot and/or the first message in accordance with a predefined mode and/or indication information.

In a possible embodiment of the present disclosure, when determining the UE type of the UE through the first pilot and/or the first message in accordance with the predefined mode and/or indication information, the processor 1300 is configured to perform at least one of: determining the UE type of the UE through the first pilot in accordance with a first predefined mode; determining the UE type of the UE through the first message in accordance with a second predefined mode; determining the UE type of the UE through the first pilot and/or the first message in accordance with a third predefined mode; determining the UE type of the UE through the first pilot in accordance with a fourth predefined mode, and determining the UE type of the UE through the first message in accordance with first indication information; determining the UE type of the UE through the first pilot in accordance with second indication information, and determining the UE type of the UE through the first message in accordance with a fifth predefined mode; determining the UE type of the UE through the first pilot and/or the first message in accordance with third indication information; or determining the UE type of the UE in the random access procedure in accordance with fourth indication information, and determining the UE type of the UE through the first pilot or the first message in accordance with a sixth predefined mode.

In a possible embodiment of the present disclosure, when determining the UE type of the UE through the first pilot in accordance with the first predefined mode, the processor 1300 is configured to, in the case that the network device has configured a specific PRACH preamble sequence and/or a specific random access occasion for the UE, determine the UE type of the UE through the first pilot.

In a possible embodiment of the present disclosure, when determining the UE type of the UE through the first message in accordance with the second predefined mode, the processor 1300 is configured to perform at least one of: in the case that the UE type of the UE fails to be indicated in the first pilot, determining the UE type of the UE through the first message; in the case that the network device fails to configure a specific PRACH preamble sequence and a specific random access occasion for the UE, determining the UE type of the UE through the first message; in the case that the network device has configured a specific initial uplink BWP for the UE, determining the UE type of the UE through the first message; in the case that the network device fails to configure the specific PRACH preamble sequence and the specific random access occasion for the UE but has configured the specific initial uplink BWP for the UE, determining the UE type of the UE through the first message; or in the case that there is no limiting condition, determining the UE type of the UE through the first message.

In a possible embodiment of the present disclosure, when determining the UE type of the UE through the first pilot and/or the first message in accordance with the third predefined mode, the processor 1300 is configured to: in the case that the network device has configured a specific PRACH preamble sequence and/or a specific random access occasion for the UE, determine the UE type of the UE through the first pilot, and in the case that the network device has configured a specific initial uplink BWP for the UE, determine the UE type of the UE through the first message; or in the case that the network device has configured the specific PRACH preamble sequence and/or the specific random access occasion for the UE, determine the UE type of the UE through the first pilot, and in the case that there is no limiting condition, determine the UE type of the UE through the first message.

In a possible embodiment of the present disclosure, when determining the UE type of the UE through the first pilot in accordance with the fourth predefined mode, the processor 1300 is configured to, in the case that the network device has configured a specific PRACH preamble sequence and/or a specific random access occasion for the UE, determine the UE type of the UE through the first pilot, and when determining the UE type of the UE through the first message in accordance with the first indication information, the processor 1300 is configured to, in the case that the first indication information indicates that a UE type is to be indicated in the first message, determine the UE type of the UE through the first message.

In a possible embodiment of the present disclosure, when determining the UE type of the UE through the first pilot in accordance with the second indication information, the processor 1300 is configured to, in the case that the second indication information indicates that a UE type is to be indicated in the first pilot, determine the UE type of the UE through the first pilot. When determining the UE type of the UE through the first message in accordance with the fifth predefined mode, the processor 1300 is configured to perform at least one of: in the case that the UE type of the UE fails to be indicated in the first pilot, determining the UE type of the UE through the first message; in the case that the network device has configured a specific initial uplink BWP for the UE, determining the UE type of the UE through the first message; in the case that the UE type of the UE fails to be indicated in the first pilot and the network device has configured the specific initial uplink BWP for the UE, determining the UE type of the UE through the first message; or in the case that there is no limiting condition, determining the UE type of the UE through the first message.

In a possible embodiment of the present disclosure, when determining the UE type of the UE through the first pilot and/or the first message in accordance with the third indication information, the processor 1300 is configured to perform at least one of: in the case that the third indication information indicates that a UE type is to be indicated merely in the first pilot, determining the UE type of the UE through the first pilot; in the case that the third indication information indicates that a UE type is to be indicated merely in the first message, determining the UE type of the UE through the first message; in the case that the third indication information indicates that a UE type is to be indicated in the first pilot and the first message, determining the UE type of the UE through the first pilot and the first message; or in the case that the third indication information indicates that no UE type is to be indicated in the first pilot and the first message, not determining the UE type of the UE through the first pilot and the first message.

In a possible embodiment of the present disclosure, when determining the UE type of the UE in the random access procedure in accordance with the fourth indication information, the processor 1300 is configured to, in the case that the fourth indication information indicates that the UE type of the UE is to be indicated in the random access procedure, determine the UE type of the UE in the random access procedure in accordance with the fourth indication information. When determining the UE type of the UE through the first pilot or the first message in accordance with the sixth predefined mode, the processor 1300 is configured to: in the case that the network device has configured a specific PRACH preamble sequence and/or a specific random access occasion for the UE, determine the UE type of the UE through the first pilot; or in the case that the network device fails to configure the specific PRACH preamble sequence and the specific random access occasion for the UE, determine the UE type of the UE through the first message; or in the case that the UE type of the UE fails to be indicated in the first pilot, determine the UE type of the UE through the first message.

In a possible embodiment of the present disclosure, when determining the UE type of the UE through the first pilot, the processor 1300 is configured to determine the UE type of the UE through receiving the first pilot using a PRACH preamble sequence specific for the UE, and/or determining the UE type of the UE through the first pilot received in a random access occasion specific for the UE. When determining the UE type of the UE through the first message, the processor 1300 is configured to determine the UE type of the UE through a logical channel identity specific for the UE carried in the first message.

In FIG. 13, bus architecture may include a number of buses and bridges connected to each other, so as to connect various circuits for one or more processors 1300 and one or more memories 1310. In addition, as is known in the art, the bus architecture may be used to connect any other circuits, such as a circuit for a peripheral device, a circuit for a voltage stabilizer and a power management circuit. A bus interface may be provided, and the transceiver 1320 may consist of a plurality of elements, i.e., a transmitter and a receiver for communication with any other devices over a transmission medium. The transmission medium includes a wireless channel, a wired channel, or an optical cable. The processor 1300 may take charge of managing the bus architecture as well as general processings. The memory 1310 may store therein data for the operation of the processor 1300.

The processor 1300 is a CPU, an ASIC, an FPGA or a CPLD. The processor may also use multi-core architecture.

The present disclosure further provides in some embodiments an access device 1400 applied to a UE which, as shown in FIG. 14, includes a transmission unit 1410 configured to transmit a first pilot and a first message in a random access procedure. AUE type of the UE is indicated in the first pilot and/or the first message in accordance with a predefined mode and/or indication information.

In a possible embodiment of the present disclosure, when indicating the UE type of the UE in the first pilot and/or the first message in accordance with the predefined mode and/or indication information, the transmission unit 1410 is configured to perform at least one of: indicating the UE type of the UE in the first pilot in accordance with a first predefined mode; indicating the UE type of the UE in the first message in accordance with a second predefined mode; indicating the UE type of the UE in the first pilot and the first message in a third predefined mode; indicating the UE type of the UE in the first pilot in accordance with a fourth predefined mode, and indicating the UE type of the UE in the first message in accordance with first indication information; indicating the UE type of the UE in the first pilot in accordance with second indication information, and indicating the UE type of the UE in the first message in accordance with a fifth predefined mode; indicating the UE type of the UE in the first pilot and/or the first message in accordance with third indication information; or indicating the UE type of the UE in the random access procedure in accordance with fourth indication information, and indicating the UE type of the UE in the first pilot or the first message in accordance with a sixth predefined mode.

In a possible embodiment of the present disclosure, when indicating the UE type of the UE in the first pilot in accordance with the first predefined mode, the transmission unit 1410 is configured to, in the case that a network device has configured a specific PRACH preamble sequence and/or a specific random access occasion for the UE, indicate the UE type of the UE in the first pilot.

In a possible embodiment of the present disclosure, when indicating the UE type of the UE in the first message in accordance with the second predefined mode, the transmission unit 1410 is configured to perform at least one of: in the case that the UE type of the UE fails to be indicated in the first pilot, indicating the UE type of the UE in the first message; in the case that a network device fails to configure a specific PRACH preamble sequence and a specific random access occasion for the UE, indicating the UE type of the UE in the first message; in the case that the network device has configured a specific initial uplink BWP for the UE, indicating the UE type of the UE in the first message; in the case that the network device fails to configure the specific PRACH preamble sequence and the specific random access occasion for the UE but has configured the specific initial uplink BWP for the UE, indicating the UE type of the UE in the first message; or in the case that there is no limiting condition, indicating the UE type of the UE in the first message.

In a possible embodiment of the present disclosure, when indicating the UE type of the UE in the first pilot and the first message in accordance with the third predefined mode, the transmission unit 1410 is configured to: in the case that a network device has configured a specific PRACH preamble sequence and/or a specific random access occasion for the UE, indicate the UE type of the UE in the first pilot, and in the case that the network device has configured a specific initial uplink BWP for the UE, indicate the UE type of the UE in the first message; or in the case that the network device has configured the specific PRACH preamble sequence and/or the specific random access occasion for the UE, indicate the UE type of the UE in the first pilot, and in the case that whether or not the UE type of the UE is indicated in the first pilot is not taken into consideration, indicate the UE type of the UE in the first message.

In a possible embodiment of the present disclosure, when indicating the UE type of the UE in the first pilot in accordance with the fourth predefined mode, the transmission unit 1410 is configured to, in the case that a network device has configured a specific PRACH preamble sequence and/or a specific random access occasion for the UE, indicate the UE type of the UE in the first pilot, and when indicating the UE type of the UE in the first message in accordance with the first indication information, the transmission unit 1410 is configured to, in the case that the first indication information indicates that a UE type is to be indicated in the first message, indicate the UE type of the UE in the first message.

In a possible embodiment of the present disclosure, when indicating the UE type of the UE in the first pilot in accordance with the second indication information, the transmission unit 1410 is configured to, in the case that the second indication information indicates that a UE type is to be indicated in the first pilot, indicate the UE type of the UE in the first pilot. When indicating the UE type of the UE in the first message in accordance with the fifth predefined mode, the transmission unit 1410 is configured to perform at least one of: in the case that the UE type of the UE fails to be indicated in the first pilot, indicating the UE type of the UE in the first message; in the case that a network device has configured a specific initial uplink BWP for the UE, indicating the UE type of the UE in the first message; in the case that the UE type of the UE fails to be indicated in the first pilot and the network device has configured the specific initial uplink BWP for the UE, indicating the UE type of the UE in the first message; or in the case that there is no limiting condition, indicating the UE type of the UE in the first message.

In a possible embodiment of the present disclosure, when indicating the UE type of the UE in the first pilot and/or the first message in accordance with the third indication information, the transmission unit 1410 is configured to perform at least one of: in the case that the third indication information indicates that a UE type is to be indicated merely in the first pilot, indicating the UE type of the UE in the first pilot; in the case that the third indication information indicates that a UE type is to be indicated merely in the first message, indicating the UE type of the UE in the first message; in the case that the third indication information indicates that a UE type is to be indicated in the first pilot and the first message, indicating the UE type of the UE in the first pilot and the first message; or in the case that the third indication information indicates that no UE type is to be indicated in the first pilot and the first message, not indicating the UE type of the UE in the first pilot and the first message.

In a possible embodiment of the present disclosure, when indicating the UE type of the UE in the random access procedure in accordance with the fourth indication information, the transmission unit 1410 is configured to, in the case that the fourth indication information indicates that the UE type of the UE is to be indicated in the random access procedure, indicate the UE type of the UE in the random access procedure in accordance with the fourth indication information. When indicating the UE type of the UE in the first pilot or the first message in accordance with the sixth predefined mode, the transmission unit 1410 is configured to: in the case that a network device has configured a specific PRACH preamble sequence and/or a specific random access occasion for the UE, indicate the UE type of the UE in the first pilot; or in the case that the network device fails to configure the specific PRACH preamble sequence and the specific random access occasion for the UE, indicate the UE type of the UE in the first message; or in the case that the UE type of the UE fails to be indicated in the first pilot, indicate the UE type of the UE in the first message.

In a possible embodiment of the present disclosure, the UE type of the UE is indicated in the first pilot through using, by the first pilot, a PRACH preamble sequence specific for the UE, and/or transmitting the first pilot in a random access occasion specific for the UE. The UE type of the UE is indicated in the first message through carrying a logical channel identity specific for the UE in the first message.

In a possible embodiment of the present disclosure, the UE type is an RedCap UE type.

In a possible embodiment of the present disclosure, the random access procedure is a four-step random access procedure, the first pilot is a PRACH pilot in the random access procedure, and the first message is an Msg3 in the random access procedure; or the random access procedure is a two-step random access procedure, the first pilot is a PRACH pilot in an MsgA in the random access procedure, and the first message is a PUSCH in the MsgA in the random access procedure.

The present disclosure further provides in some embodiments an access device applied to a network device 1500 which, as shown in FIG. 15, includes: a reception unit 1510 configured to receive a first pilot and a first message from a UE in a random access procedure; and a processing unit 1520 configured to determine a UE type of the UE through the first pilot and/or the first message in accordance with a predefined mode and/or indication information.

In a possible embodiment of the present disclosure, when determining the UE type of the UE through the first pilot and/or the first message in accordance with the predefined mode and/or indication information, the processing unit 1520 is configured to perform at least one of: determining the UE type of the UE through the first pilot in accordance with a first predefined mode; determining the UE type of the UE through the first message in accordance with a second predefined mode; determining the UE type of the UE through the first pilot and/or the first message in accordance with a third predefined mode; determining the UE type of the UE through the first pilot in accordance with a fourth predefined mode, and determining the UE type of the UE through the first message in accordance with first indication information; determining the UE type of the UE through the first pilot in accordance with second indication information, and determining the UE type of the UE through the first message in accordance with a fifth predefined mode; determining the UE type of the UE through the first pilot and/or the first message in accordance with third indication information; or determining the UE type of the UE in the random access procedure in accordance with fourth indication information, and determining the UE type of the UE through the first pilot or the first message in accordance with a sixth predefined mode.

In a possible embodiment of the present disclosure, when determining the UE type of the UE through the first pilot in accordance with the first predefined mode, the processing unit 1520 is configured to, in the case that the network device has configured a specific PRACH preamble sequence and/or a specific random access occasion for the UE, determine the UE type of the UE through the first pilot.

In a possible embodiment of the present disclosure, when determining the UE type of the UE through the first message in accordance with the second predefined mode, the processing unit 1520 is configured to perform at least one of: in the case that the UE type of the UE fails to be indicated in the first pilot, determining the UE type of the UE through the first message; in the case that the network device fails to configure a specific PRACH preamble sequence and a specific random access occasion for the UE, determining the UE type of the UE through the first message; in the case that the network device has configured a specific initial uplink BWP for the UE, determining the UE type of the UE through the first message; in the case that the network device fails to configure the specific PRACH preamble sequence and the specific random access occasion for the UE but has configured the specific initial uplink BWP for the UE, determining the UE type of the UE through the first message; or in the case that there is no limiting condition, determining the UE type of the UE through the first message.

In a possible embodiment of the present disclosure, when determining the UE type of the UE through the first pilot and/or the first message in accordance with the third predefined mode, the processing unit 1520 is configured to: in the case that the network device has configured a specific PRACH preamble sequence and/or a specific random access occasion for the UE, determine the UE type of the UE through the first pilot, and in the case that the network device has configured a specific initial uplink BWP for the UE, determine the UE type of the UE through the first message; or in the case that the network device has configured the specific PRACH preamble sequence and/or the specific random access occasion for the UE, determine the UE type of the UE through the first pilot, and in the case that there is no limiting condition, determine the UE type of the UE through the first message.

In a possible embodiment of the present disclosure, when determining the UE type of the UE through the first pilot in accordance with the fourth predefined mode, the processing unit 1520 is configured to, in the case that the network device has configured a specific PRACH preamble sequence and/or a specific random access occasion for the UE, determine the UE type of the UE through the first pilot, and when determining the UE type of the UE through the first message in accordance with the first indication information, the processing unit 1520 is configured to, in the case that the first indication information indicates that a UE type is to be indicated in the first message, determine the UE type of the UE through the first message.

In a possible embodiment of the present disclosure, when determining the UE type of the UE through the first pilot in accordance with the second indication information, the processing unit 1520 is configured to, in the case that the second indication information indicates that a UE type is to be indicated in the first pilot, determine the UE type of the UE through the first pilot. When determining the UE type of the UE through the first message in accordance with the fifth predefined mode, the processing unit 1520 is configured to perform at least one of: in the case that the UE type of the UE fails to be indicated in the first pilot, determining the UE type of the UE through the first message; in the case that the network device has configured a specific initial uplink BWP for the UE, determining the UE type of the UE through the first message; in the case that the UE type of the UE fails to be indicated in the first pilot and the network device has configured the specific initial uplink BWP for the UE, determining the UE type of the UE through the first message; or in the case that there is no limiting condition, determining the UE type of the UE through the first message.

In a possible embodiment of the present disclosure, when determining the UE type of the UE through the first pilot and/or the first message in accordance with the third indication information, the processing unit 1520 is configured to perform at least one of: in the case that the third indication information indicates that a UE type is to be indicated merely in the first pilot, determining the UE type of the UE through the first pilot; in the case that the third indication information indicates that a UE type is to be indicated merely in the first message, determining the UE type of the UE through the first message; in the case that the third indication information indicates that a UE type is to be indicated in the first pilot and the first message, determining the UE type of the UE through the first pilot and the first message; or in the case that the third indication information indicates that no UE type is to be indicated in the first pilot and the first message, not determining the UE type of the UE through the first pilot and the first message.

In a possible embodiment of the present disclosure, when determining the UE type of the UE in the random access procedure in accordance with the fourth indication information, the processing unit 1520 is configured to, in the case that the fourth indication information indicates that the UE type of the UE is to be indicated in the random access procedure, determine the UE type of the UE in the random access procedure in accordance with the fourth indication information. When determining the UE type of the UE through the first pilot or the first message in accordance with the sixth predefined mode, the processing unit 1520 is configured to: in the case that the network device has configured a specific PRACH preamble sequence and/or a specific random access occasion for the UE, determine the UE type of the UE through the first pilot; or in the case that the network device fails to configure the specific PRACH preamble sequence and the specific random access occasion for the UE, determine the UE type of the UE through the first message; or in the case that the UE type of the UE fails to be indicated in the first pilot, determine the UE type of the UE through the first message.

In a possible embodiment of the present disclosure, when determining the UE type of the UE through the first pilot, the processing unit 1520 is configured to determine the UE type of the UE through receiving the first pilot using a PRACH preamble sequence specific for the UE, and/or determining the UE type of the UE through the first pilot received in a random access occasion specific for the UE. When determining the UE type of the UE through the first message, the processing unit 1520 is configured to determine the UE type of the UE through a logical channel identity specific for the UE carried in the first message.

In a possible embodiment of the present disclosure, the UE type is an RedCap UE type.

In a possible embodiment of the present disclosure, the random access procedure is a four-step random access procedure, the first pilot is a PRACH pilot in the random access procedure, and the first message is an Msg3 in the random access procedure; or the random access procedure is a two-step random access procedure, the first pilot is a PRACH pilot in an MsgA in the random access procedure, and the first message is a PUSCH in the MsgA in the random access procedure.

It should be appreciated that, the above-mentioned access device is used to implement the steps of the above-mentioned access method with a same technical effect, which will not be particularly defined herein.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

The present disclosure further provides in some embodiments a processor-readable storage medium storing therein a computer program. The computer program is executed by a processor so as to implement the steps of the above-mentioned access method.

The processor-readable storage medium may be any available medium or data storage device capable of being accessed by a processor, which includes, but not limited to, a magnetic memory (e.g., floppy disk, hard disk, magnetic tape, or Magnetic Optical disk (MO)), an optical memory (e.g., Compact Disk (CD), Digital Video Disk (DVD), Blue-ray Disk (BD), or High-definition Versatile Disc (HVD)), or a semiconductor memory (e.g., Read-Only Memory (ROM), Electrically Programmable ROM (EPROM), Electrically Erasable PROM (EEPROM), NAND flash, or Solid-State Disk (SSD)).

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be further appreciated that, the above modules in the network device and the UE are divided merely on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, the determination module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. An access method performed by a User Equipment (LTE), comprising transmitting a first pilot and a first message in a random access procedure, wherein a UE type of the UE is indicated in the first pilot and/or the first message in accordance with a predefined mode and/or indication information.

2. The access method according to claim 1, wherein the UE type of the UE is indicated in the first pilot and/or the first message in accordance with the predefined mode and/or indication information through at least one of:
indicating the UE type of the UE in the first pilot in accordance with a first predefined mode;
indicating the UE type of the UE in the first message in accordance with a second predefined mode;
indicating the UE type of the UE in the first pilot and the first message in a third predefined mode;
indicating the UE type of the UE in the first pilot in accordance with a fourth predefined mode, and indicating the UE type of the UE in the first message in accordance with first indication information;
indicating the UE type of the UE in the first pilot in accordance with second indication information, and indicating the UE type of the UE in the first message in accordance with a fifth predefined mode;
indicating the UE type of the UE in the first pilot and/or the first message in accordance with third indication information; or
indicating the UE type of the UE in the random access procedure in accordance with fourth indication information, and indicating the UE type of the UE in the first pilot or the first message in accordance with a sixth predefined mode.

3. The access method according to claim 2, wherein the indicating the UE type of the UE in the first pilot in accordance with the first predefined mode comprises, in the case that a network device has configured a specific Physical Random Access Channel (PRACH) preamble sequence and/or a specific random access occasion for the UE, indicating the UE type of the UE in the first pilot.

4. The access method according to claim 2, wherein the indicating the UE type of the UE in the first message in accordance with the second predefined mode comprises at least one of:
in the case that the UE type of the UE fails to be indicated in the first pilot, indicating the UE type of the UE in the first message;
in the case that a network device fails to configure a specific PRACH preamble sequence and a specific random access occasion for the UE, indicating the UE type of the UE in the first message;
in the case that the network device has configured a specific initial uplink Bandwidth Part (BWP) for the UE, indicating the UE type of the UE in the first message;
in the case that the network device fails to configure the specific PRACH preamble sequence and the specific random access occasion for the UE but has configured the specific initial uplink BWP for the UE, indicating the UE type of the UE in the first message; or
in the case that whether or not the UE type of the UE is indicated in the first pilot is not taken into consideration, indicating the UE type of the UE in the first message.

5. The access method according to claim 2, wherein the indicating the UE type of the UE in the first pilot and the first message in accordance with the third predefined mode comprises:
in the case that a network device has configured a specific PRACH preamble sequence and/or a specific random access occasion for the UE, indicating the UE type of the UE in the first pilot, and in the case that the network device has configured a specific initial uplink BWP for the UE, indicating the UE type of the UE in the first message; or
in the case that the network device has configured the specific PRACH preamble sequence and/or the specific random access occasion for the UE, indicating the UE type of the UE in the first pilot, and in the case that whether or not the UE type of the UE is indicated in the first pilot is not taken into consideration, indicating the UE type of the UE in the first message.

6. The access method according to claim 2, wherein the indicating the UE type of the UE in the first pilot in accordance with the fourth predefined mode comprises, in the case that a network device has configured a specific PRACH preamble sequence and/or a specific random access occasion for the UE, indicating the UE type of the UE in the first pilot;
the indicating the UE type of the UE in the first message in accordance with the first indication information comprises, in the case that the first indication information indicates that a UE type is to be indicated in the first message, indicating the UE type of the UE in the first message.

7. The access method according to claim 2, wherein the indicating the UE type of the UE in the first pilot in accordance with the second indication information comprises, in the case that the second indication information indicates that a UE type is to be indicated in the first pilot, indicating the UE type of the UE in the first pilot,
wherein the indicating the UE type of the UE in the first message in accordance with the fifth predefined mode comprises at least one of:
in the case that the UE type of the UE fails to be indicated in the first pilot, indicating the UE type of the UE in the first message;
in the case that a network device has configured a specific initial uplink BWP for the UE, indicating the UE type of the UE in the first message;
in the case that the UE type of the UE fails to be indicated in the first pilot and the network device has configured the specific initial uplink BWP for the UE, indicating the UE type of the UE in the first message; or
in the case that whether or not the UE type of the UE is indicated in the first pilot is not taken into consideration, indicating the UE type of the UE in the first message.

8. The access method according to claim 2, wherein the indicating the UE type of the UE in the first pilot and/or the first message in accordance with the third indication information comprises at least one of:
in the case that the third indication information indicates that a UE type is to be indicated merely in the first pilot, indicating the UE type of the UE in the first pilot;
in the case that the third indication information indicates that a UE type is to be indicated merely in the first message, indicating the UE type of the UE in the first message;
in the case that the third indication information indicates that a UE type is to be indicated in the first pilot and the first message, indicating the UE type of the UE in the first pilot and the first message; or
in the case that the third indication information indicates that no UE type is to be indicated in the first pilot and the first message, not indicating the UE type of the UE in the first pilot and the first message.

9. The access method according to claim 2, wherein the indicating the UE type of the UE in the random access procedure in accordance with the fourth indication information comprises, in the case that the fourth indication information indicates that the UE type of the UE is to be indicated in the random access procedure, indicating the UE type of the UE in the random access procedure in accordance with the fourth indication information,
wherein the indicating the UE type of the UE in the first pilot or the first message in accordance with the sixth predefined mode comprises:
in the case that a network device has configured a specific PRACH preamble sequence and/or a specific random access occasion for the UE, indicating the UE type of the UE in the first pilot; or
in the case that the network device fails to configure the specific PRACH preamble sequence and the specific random access occasion for the UE, indicating the UE type of the UE in the first message; or
in the case that the UE type of the UE fails to be indicated in the first pilot, indicating the UE type of the UE in the first message.

10. The access method according to claim 1, wherein the UE type of the UE is indicated in the first pilot through using, by the first pilot, a PRACH preamble sequence specific for the UE, and/or transmitting the first pilot in a random access occasion specific for the UE, wherein the UE type of the UE is indicated in the first message through carrying a logical channel identity specific for the UE in the first message.

11. The access method according to any one of claims 1 to 10, wherein the UE type is a Reduced Capability (RedCap) UE type.

12. The access method according to any one of claims 1 to 10, wherein the random access procedure is a four-step random access procedure, the first pilot is a PRACH pilot in the random access procedure, and the first message is a message3 (Msg3) in the random access procedure; or
the random access procedure is a two-step random access procedure, the first pilot is a PRACH pilot in a message A (MsgA) in the random access procedure, and the first message is a Physical Uplink Shared Channel (PUSCH) in the MsgA in the random access procedure.

13. An access method performed by a network device, comprising:
receiving a first pilot and a first message from a User Equipment (UE) in a random access procedure; and
determining a UE type of the UE through the first pilot and/or the first message in accordance with a predefined mode and/or indication information.

14. The access method according to claim 13, wherein the determining the UE type of the UE through the first pilot and/or the first message in accordance with the predefined mode and/or indication information comprises at least one of:
determining the UE type of the UE through the first pilot in accordance with a first predefined mode;
determining the UE type of the UE through the first message in accordance with a second predefined mode;
determining the UE type of the UE through the first pilot and/or the first message in accordance with a third predefined mode;
determining the UE type of the UE through the first pilot in accordance with a fourth predefined mode, and determining the UE type of the UE through the first message in accordance with first indication information;
determining the UE type of the UE through the first pilot in accordance with second indication information, and determining the UE type of the UE through the first message in accordance with a fifth predefined mode;
determining the UE type of the UE through the first pilot and/or the first message in accordance with third indication information; or
determining the UE type of the UE in the random access procedure in accordance with fourth indication information, and determining the UE type of the UE through the first pilot or the first message in accordance with a sixth predefined mode.

15. The access method according to claim 14, wherein the determining the UE type of the UE through the first pilot in accordance with the first predefined mode comprises, in the case that the network device has configured a specific Physical Random Access Channel (PRACH) preamble sequence and/or a specific random access occasion for the UE, determining the UE type of the UE through the first pilot.

16. The access method according to claim 14, wherein the determining the UE type of the UE through the first message in accordance with the second predefined mode comprises at least one of:
in the case that the UE type of the UE fails to be indicated in the first pilot, determining the UE type of the UE through the first message;
in the case that the network device fails to configure a specific PRACH preamble sequence and a specific random access occasion for the UE, determining the UE type of the UE through the first message;
in the case that the network device has configured a specific initial uplink Bandwidth Part (BWP) for the UE, determining the UE type of the UE through the first message;
in the case that the network device fails to configure the specific PRACH preamble sequence and the specific random access occasion for the UE but has configured the specific initial uplink BWP for the UE, determining the UE type of the UE through the first message; or
in the case that whether or not the UE type of the UE is determined through the first pilot is not taken into consideration, determining the UE type of the UE through the first message.

17. The access method according to claim 14, wherein the determining the UE type of the UE through the first pilot and/or the first message in accordance with the third predefined mode comprises:
in the case that the network device has configured a specific PRACH preamble sequence and/or a specific random access occasion for the UE, determining the UE type of the UE through the first pilot, and in the case that the network device has configured a specific initial uplink BWP for the UE, determining the UE type of the UE through the first message; or
in the case that the network device has configured the specific PRACH preamble sequence and/or the specific random access occasion for the UE, determining the UE type of the UE through the first pilot, and in the case that whether or not the UE type of the UE is determined through the first pilot is not taken into consideration, determining the UE type of the UE through the first message.

18. The access method according to claim 14, wherein the determining the UE type of the UE through the first pilot in accordance with the fourth predefined mode comprises, in the case that the network device has configured a specific PRACH preamble sequence and/or a specific random access occasion for the UE, determining the UE type of the UE through the first pilot;
the determining the UE type of the UE through the first message in accordance with the first indication information comprises, in the case that the first indication information indicates that a UE type is to be indicated in the first message, determining the UE type of the UE through the first message.

19. The access method according to claim 14, wherein the determining the UE type of the UE through the first pilot in accordance with the second indication information comprises, in the case that the second indication information indicates that a UE type is to be indicated in the first pilot, determining the UE type of the UE through the first pilot,
wherein the determining the UE type of the UE through the first message in accordance with the fifth predefined mode comprises at least one of:
in the case that the UE type of the UE fails to be indicated in the first pilot, determining the UE type of the UE through the first message;
in the case that the network device has configured a specific initial uplink BWP for the UE, determining the UE type of the UE through the first message;
in the case that the UE type of the UE fails to be indicated in the first pilot and the network device has configured the specific initial uplink BWP for the UE, determining the UE type of the UE through the first message; or
in the case that whether or not the UE type of the UE is determined through the first pilot is not taken into consideration, determining the UE type of the UE through the first message.

20. The access method according to claim 14, wherein the determining the UE type of the UE through the first pilot and/or the first message in accordance with the third indication information comprises at least one of:
in the case that the third indication information indicates that a UE type is to be indicated merely in the first pilot, determining the UE type of the UE through the first pilot;
in the case that the third indication information indicates that a UE type is to be indicated merely in the first message, determining the UE type of the UE through the first message;
in the case that the third indication information indicates that a UE type is to be indicated in the first pilot and the first message, determining the UE type of the UE through the first pilot and the first message; or
in the case that the third indication information indicates that no UE type is to be indicated in the first pilot and the first message, not determining the UE type of the UE through the first pilot and the first message.

21. The access method according to claim 14, wherein the determining the UE type of the UE in the random access procedure in accordance with the fourth indication information comprises, in the case that the fourth indication information indicates that the UE type of the UE is to be indicated in the random access procedure, determining the UE type of the UE in the random access procedure in accordance with the fourth indication information,
wherein the determining the UE type of the UE through the first pilot or the first message in accordance with the sixth predefined mode comprises:
in the case that the network device has configured a specific PRACH preamble sequence and/or a specific random access occasion for the UE, determining the UE type of the UE through the first pilot; or
in the case that the network device fails to configure the specific PRACH preamble sequence and the specific random access occasion for the UE, determining the UE type of the UE through the first message; or
in the case that the UE type of the UE fails to be indicated in the first pilot, determining the UE type of the UE through the first message.

22. The access method according to claim 13, wherein the determining the UE type of the UE through the first pilot comprises determining the UE type of the UE through receiving the first pilot using a PRACH preamble sequence specific for the UE, and/or determining the UE type of the UE through the first pilot received in a random access occasion specific for the UE;
wherein the determining the UE type of the UE through the first message comprises determining the UE type of the UE through a logical channel identity specific for the UE carried in the first message.

23. The access method according to any one of claims 13 to 22, wherein the UE type is a Reduced Capability (RedCap) UE type.

24. The access method according to any one of claims 13 to 22, wherein the random access procedure is a four-step random access procedure, the first pilot is a PRACH pilot in the random access procedure, and the first message is a message3 (Msg3) in the random access procedure; or
the random access procedure is a two-step random access procedure, the first pilot is a PRACH pilot in a message A (MsgA) in the random access procedure, and the first message is a Physical Uplink Shared Channel (PUSCH) in the MsgA in the random access procedure.

25. A User Equipment (UE), comprising a memory, a transceiver and a processor, wherein the memory is configured to store therein a computer program, the transceiver is configured to receive and transmit data under the control of the processor, and the processor is configured to read the computer program in the memory so as to transmit a first pilot and a first message in a random access procedure, wherein a UE type of the UE is indicated in the first pilot and/or the first message in accordance with a predefined mode and/or indication information.

26. The UE according to claim 25, wherein when indicating the UE type of the UE in the first pilot and/or the first message in accordance with the predefined mode and/or indication information, the processor is configured to perform at least one of:
indicating the UE type of the UE in the first pilot in accordance with a first predefined mode;
indicating the UE type of the UE in the first message in accordance with a second predefined mode;
indicating the UE type of the UE in the first pilot and the first message in a third predefined mode;
indicating the UE type of the UE in the first pilot in accordance with a fourth predefined mode, and indicating the UE type of the UE in the first message in accordance with first indication information;
indicating the UE type of the UE in the first pilot in accordance with second indication information, and indicating the UE type of the UE in the first message in accordance with a fifth predefined mode;
indicating the UE type of the UE in the first pilot and/or the first message in accordance with third indication information; or
indicating the UE type of the UE in the random access procedure in accordance with fourth indication information, and indicating the UE type of the UE in the first pilot or the first message in accordance with a sixth predefined mode.

27. The UE according to claim 26, wherein when indicating the UE type of the UE in the first pilot in accordance with the first predefined mode, the processor is configured to, in the case that a network device has configured a specific Physical Random Access Channel (PRACH) preamble sequence and/or a specific random access occasion for the UE, indicate the UE type of the UE in the first pilot.

28. The UE according to claim 26, wherein when indicating the UE type of the UE in the first message in accordance with the second predefined mode, the processor is configured to perform at least one of:
in the case that the UE type of the UE fails to be indicated in the first pilot, indicating the UE type of the UE in the first message;
in the case that a network device fails to configure a specific PRACH preamble sequence and a specific random access occasion for the UE, indicating the UE type of the UE in the first message;
in the case that the network device has configured a specific initial uplink Bandwidth Part (BWP) for the UE, indicating the UE type of the UE in the first message;
in the case that the network device fails to configure the specific PRACH preamble sequence and the specific random access occasion for the UE but has configured the specific initial uplink BWP for the UE, indicating the UE type of the UE in the first message; or
in the case that whether or not the UE type of the UE is indicated in the first pilot is not taken into consideration, indicating the UE type of the UE in the first message.

29. The UE according to claim 26, wherein when indicating the UE type of the UE in the first pilot and the first message in accordance with the third predefined mode, the processor is configured to:
in the case that a network device has configured a specific PRACH preamble sequence and/or a specific random access occasion for the UE, indicate the UE type of the UE in the first pilot, and in the case that the network device has configured a specific initial uplink BWP for the UE, indicate the UE type of the UE in the first message; or
in the case that the network device has configured the specific PRACH preamble sequence and/or the specific random access occasion for the UE, indicate the UE type of the UE in the first pilot, and in the case that whether or not the UE type of the UE is indicated in the first pilot is not taken into consideration, indicate the UE type of the UE in the first message.

30. The UE according to claim 26, wherein when indicating the UE type of the UE in the first pilot in accordance with the fourth predefined mode, the processor is configured to, in the case that a network device has configured a specific PRACH preamble sequence and/or a specific random access occasion for the UE, indicate the UE type of the UE in the first pilot;
when indicating the UE type of the UE in the first message in accordance with the first indication information, the processor is configured to, in the case that the first indication information indicates that a UE type is to be indicated in the first message, indicate the UE type of the UE in the first message.

31. The UE according to claim 26, wherein when indicating the UE type of the UE in the first pilot in accordance with the second indication information, the processor is configured to, in the case that the second indication information indicates that a UE type is to be indicated in the first pilot, indicate the UE type of the UE in the first pilot,
wherein when indicating the UE type of the UE in the first message in accordance with the fifth predefined mode, the processor is configured to perform at least one of:
in the case that the UE type of the UE fails to be indicated in the first pilot, indicating the UE type of the UE in the first message;
in the case that a network device has configured a specific initial uplink BWP for the UE, indicating the UE type of the UE in the first message;
in the case that the UE type of the UE fails to be indicated in the first pilot and the network device has configured the specific initial uplink BWP for the UE, indicating the UE type of the UE in the first message; or
in the case that whether or not the UE type of the UE is indicated in the first pilot is not taken into consideration, indicating the UE type of the UE in the first message.

32. The UE according to claim 26, wherein when indicating the UE type of the UE in the first pilot and/or the first message in accordance with the third indication information, the processor is configured to perform at least one of:
in the case that the third indication information indicates that a UE type is to be indicated merely in the first pilot, indicating the UE type of the UE in the first pilot;
in the case that the third indication information indicates that a UE type is to be indicated merely in the first message, indicating the UE type of the UE in the first message;
in the case that the third indication information indicates that a UE type is to be indicated in the first pilot and the first message, indicating the UE type of the UE in the first pilot and the first message; or
in the case that the third indication information indicates that no UE type is to be indicated in the first pilot and the first message, not indicating the UE type of the UE in the first pilot and the first message.

33. The UE according to claim 26, wherein when indicating the UE type of the UE in the random access procedure in accordance with the fourth indication information, the processor is configured to, in the case that the fourth indication information indicates that the UE type of the UE is to be indicated in the random access procedure, indicate the UE type of the UE in the random access procedure in accordance with the fourth indication information,
wherein when indicating the UE type of the UE in the first pilot or the first message in accordance with the sixth predefined mode, the processor is configured to:
in the case that a network device has configured a specific PRACH preamble sequence and/or a specific random access occasion for the UE, indicate the UE type of the UE in the first pilot; or
in the case that the network device fails to configure the specific PRACH preamble sequence and the specific random access occasion for the UE, indicate the UE type of the UE in the first message; or
in the case that the UE type of the UE fails to be indicated in the first pilot, indicate the UE type of the UE in the first message.

34. The UE according to claim 25, wherein the UE type of the UE is indicated in the first pilot through using, by the first pilot, a PRACH preamble sequence specific for the UE, and/or transmitting the first pilot in a random access occasion specific for the UE;
wherein the UE type of the UE is indicated in the first message through carrying a logical channel identity specific for the UE in the first message.

35. A network device, comprising a memory, a transceiver and a processor, wherein the memory is configured to store therein a computer program, and the transceiver is configured to receive and transmit data under the control of the processor,
wherein the processor is configured to read the computer program in the memory so as to:
receive a first pilot and a first message from a User Equipment (UE) in a random access procedure; and
determine a UE type of the UE through the first pilot and/or the first message in accordance with a predefined mode and/or indication information.

36. The network device according to claim 35, wherein when determining the UE type of the UE through the first pilot and/or the first message in accordance with the predefined mode and/or indication information, the processor is configured to perform at least one of:
determining the UE type of the UE through the first pilot in accordance with a first predefined mode;
determining the UE type of the UE through the first message in accordance with a second predefined mode;
determining the UE type of the UE through the first pilot and/or the first message in accordance with a third predefined mode;
determining the UE type of the UE through the first pilot in accordance with a fourth predefined mode, and determining the UE type of the UE through the first message in accordance with first indication information;
determining the UE type of the UE through the first pilot in accordance with second indication information, and determining the UE type of the UE through the first message in accordance with a fifth predefined mode;
determining the UE type of the UE through the first pilot and/or the first message in accordance with third indication information; or
determining the UE type of the UE in the random access procedure in accordance with fourth indication information, and determining the UE type of the UE through the first pilot or the first message in accordance with a sixth predefined mode.

37. The network device according to claim 36, wherein when determining the UE type of the UE through the first pilot in accordance with the first predefined mode, the processor is configured to, in the case that the network device has configured a specific Physical Random Access Channel (PRACH) preamble sequence and/or a specific random access occasion for the UE, determine the UE type of the UE through the first pilot.

38. The network device according to claim 36, wherein when determining the UE type of the UE through the first message in accordance with the second predefined mode, the processor is configured to perform at least one of:
in the case that the UE type of the UE fails to be indicated in the first pilot, determining the UE type of the UE through the first message;
in the case that the network device fails to configure a specific PRACH preamble sequence and a specific random access occasion for the UE, determining the UE type of the UE through the first message;
in the case that the network device has configured a specific initial uplink Bandwidth Part (BWP) for the UE, determining the UE type of the UE through the first message;
in the case that the network device fails to configure the specific PRACH preamble sequence and the specific random access occasion for the UE but has configured the specific initial uplink BWP for the UE, determining the UE type of the UE through the first message; or
in the case that whether or not the UE type of the UE is determined through the first pilot is not taken into consideration, determining the UE type of the UE through the first message.

39. The network device according to claim 36, wherein when determining the UE type of the UE through the first pilot and/or the first message in accordance with the third predefined mode, the processor is configured to:
in the case that the network device has configured a specific PRACH preamble sequence and/or a specific random access occasion for the UE, determine the UE type of the UE through the first pilot, and in the case that the network device has configured a specific initial uplink BWP for the UE, determine the UE type of the UE through the first message; or
in the case that the network device has configured the specific PRACH preamble sequence and/or the specific random access occasion for the UE, determine the UE type of the UE through the first pilot, and in the case that whether or not the UE type of the UE is determined through the first pilot is not taken into consideration, determine the UE type of the UE through the first message.

40. The network device according to claim 36, wherein when determining the UE type of the UE through the first pilot in accordance with the fourth predefined mode, the processor is configured to, in the case that the network device has configured a specific PRACH preamble sequence and/or a specific random access occasion for the UE, determine the UE type of the UE through the first pilot;
when determining the UE type of the UE through the first message in accordance with the first indication information, the processor is configured to, in the case that the first indication information indicates that a UE type is to be indicated in the first message, determine the UE type of the UE through the first message.

41. The network device according to claim 36, wherein when determining the UE type of the UE through the first pilot in accordance with the second indication information, the processor is configured to, in the case that the second indication information indicates that a UE type is to be indicated in the first pilot, determine the UE type of the UE through the first pilot,
wherein when determining the UE type of the UE through the first message in accordance with the fifth predefined mode, the processor is configured to perform at least one of:
in the case that the UE type of the UE fails to be indicated in the first pilot, determining the UE type of the UE through the first message;
in the case that the network device has configured a specific initial uplink BWP for the UE, determining the UE type of the UE through the first message;
in the case that the UE type of the UE fails to be indicated in the first pilot and the network device has configured the specific initial uplink BWP for the UE, determining the UE type of the UE through the first message; or
in the case that whether or not the UE type of the UE is determined through the first pilot is not taken into consideration, determining the UE type of the UE through the first message.

42. The network device according to claim 36, wherein when determining the UE type of the UE through the first pilot and/or the first message in accordance with the third indication information, the processor is configured to perform at least one of:
in the case that the third indication information indicates that a UE type is to be indicated merely in the first pilot, determining the UE type of the UE through the first pilot;
in the case that the third indication information indicates that a UE type is to be indicated merely in the first message, determining the UE type of the UE through the first message;
in the case that the third indication information indicates that a UE type is to be indicated in the first pilot and the first message, determining the UE type of the UE through the first pilot and the first message; or
in the case that the third indication information indicates that no UE type is to be indicated in the first pilot and the first message, not determining the UE type of the UE through the first pilot and the first message.

43. The network device according to claim 36, wherein when determining the UE type of the UE in the random access procedure in accordance with the fourth indication information, the processor is configured to, in the case that the fourth indication information indicates that the UE type of the UE is to be indicated in the random access procedure, determine the UE type of the UE in the random access procedure in accordance with the fourth indication information,
wherein when determining the UE type of the UE through the first pilot or the first message in accordance with the sixth predefined mode, the processor is configured to:
in the case that the network device has configured a specific PRACH preamble sequence and/or a specific random access occasion for the UE, determine the UE type of the UE through the first pilot; or
in the case that the network device fails to configure the specific PRACH preamble sequence and the specific random access occasion for the UE, determine the UE type of the UE through the first message; or
in the case that the UE type of the UE fails to be indicated in the first pilot, determine the UE type of the UE through the first message.

44. The network device according to claim 35, wherein when determining the UE type of the UE through the first pilot, the processor is configured to determine the UE type of the UE through receiving the first pilot using a PRACH preamble sequence specific for the UE, and/or determining the UE type of the UE through the first pilot received in a random access occasion specific for the UE;
wherein when determining the UE type of the UE through the first message, the processor is configured to determine the UE type of the UE through a logical channel identity specific for the UE carried in the first message.

45. An access device applied to a User Equipment (LTE), comprising a transmission unit configured to transmit a first pilot and a first message in a random access procedure,
wherein a UE type of the UE is indicated in the first pilot and/or the first message in accordance with a predefined mode and/or indication information.

46. An access device applied to a network device, comprising:
a reception unit configured to receive a first pilot and a first message from a User Equipment (UE) in a random access procedure; and
a processing unit configured to determine a UE type of the UE through the first pilot and/or the first message in accordance with a predefined mode and/or indication information.

47. A processor-readable storage medium storing therein a computer program, wherein the computer program is executed by a processor so as to implement the steps in the access method according to any one of claims 1 to 12, or implement the steps in the access method according to any one of claims 13 to 24.
